# EUROPEAN PATENT APPLICATION

(11) **EP 4 350 530 A1**
(43) Date of publication of application: **10.04.2024**
(21) Application number: 22831296.3
(22) Date of filing: 31.03.2022
(51) Int. Cl.: G06F 16/29

(54) **MAP DISPLAY METHOD AND APPARATUS, AND TERMINAL DEVICE**

(30) Priority: 30.06.2021 CN 202110739759
(71) Applicant: Huawei Technologies Co., Ltd., Longgang Shenzhen, Guangdong 518129 (CN)
(72) Inventor: ZENG, Lingzi, Shenzhen, Guangdong 518129 (CN)
(74) Representative: Pfenning, Meinig & Partner mbB
(86) International application number: PCT/CN2022/084380
(87) International publication number: WO 2023/273465

(57) **Abstract**

This application provides a map display method, an apparatus, and a terminal device, and relates to the field of map display technologies. The method includes: displaying a first interface, where the first interface displays a first map region; receiving a first operation of a user; and displaying a second interface in response to the first operation. The second interface includes a plurality of screen sub-regions, and the plurality of screen sub-regions include a first screen sub-region and a second screen sub-region located above the first screen sub-region. A tile in the first screen sub-region is a first tile, a tile in the second screen sub-region is a second tile, and a level of the second tile is less than a level of the first tile. According to the technical solutions provided in this application, traffic, power consumption, and rendering overheads required for displaying a 3D map can be reduced.

## Description

This application claims priority to Chinese Patent Application No. 202110739759.1, filed with the China National Intellectual Property Administration on June 30, 2021 and entitled "MAP DISPLAY METHOD, APPARATUS, AND TERMINAL DEVICE", which is incorporated herein by reference in its entirety.

### TECHNICAL FIELD

This application relates to the field of electronic map technologies, and in particular, to a map display method, an apparatus, and a terminal device.

### BACKGROUND

An electronic map may provide persons with services such as point of interest (point of interest, POI) query, navigation, and route planning, and is one of important applications in daily life of persons. A three-dimensional (three-dimensional, 3D) map can display map elements such as buildings and roads from a three-dimensional perspective, and more realistically restore a real world. Therefore, the three-dimensional map is favored by many users.

When using the 3D map, the user may tilt a map plane to enable the map to display a larger field of view range, so that the user can view a farther part of the map. However, if a display field of view of the map is enlarged, an amount of data displayed on the map increases exponentially. In this case, indicators such as traffic, power consumption, and rendering overheads also increase.

### SUMMARY

In view of this, this application provides a map display method, an apparatus, and a terminal device, to reduce traffic, power consumption, and rendering overheads required for displaying a 3D map.

To achieve the foregoing objective, according to a first aspect, an embodiment of this application provides a map display method, applied to a terminal device. The method includes:
displaying a first interface, where the first interface displays a first map region;
receiving a first operation of a user; and
displaying a second interface in response to the first operation, where the second interface includes a plurality of screen sub-regions, and the plurality of screen sub-regions include a first screen sub-region and a second screen sub-region located above the first screen sub-region.

A tile in the first screen sub-region is a first tile, a tile in the second screen sub-region is a second tile, and a level of the second tile is less than a level of the first tile.

A map displayed in the first map region may be a 2D map or a 3D map.

According to the map display method provided in this embodiment, when a map is displayed, tiles of different levels may be loaded and displayed in screen sub-regions. A level of a tile in an upper screen sub-region is less than a level of a tile in a lower screen sub-region. In this way, a map data volume required by a remote region of the map can be effectively reduced, and therefore traffic, power consumption, and rendering overheads can be reduced. Therefore, the terminal device can support 3D map display requirements of various sizes of fields of view, and map data in the remote region can also be displayed to the user in this solution, so that use experience of the user can also be improved.

In a possible implementation of the first aspect, the second interface is a navigation interface or an interface displaying a non-navigation map.

In a possible implementation of the first aspect, the first operation includes at least one of the following operations: an operation of enabling a navigation mode, a gesture operation of changing a tilt angle of a map plane, a tapping operation on a target control, a map zooming operation, and a map panning operation.

In a possible implementation of the first aspect, the second interface includes a first object. When the first object is completely located in the first screen sub-region, a 3D model corresponding to the first object is displayed.

When a first part of the first object is located in the first screen sub-region and a second part of the first object is located in the second screen sub-region, a 3D model corresponding to the first part is displayed, and a 3D model corresponding to the second part is not displayed.

When the first object completely moves to the second screen sub-region, the 3D model corresponding to the first object is not displayed.

In the foregoing implementation, in a process in which the first object moves from the first screen sub-region to the second screen sub-region, an effect that the 3D model gradually disappears when passing through a boundary line between the first screen sub-region and the second screen sub-region can be visually presented. In this way, visual experience of the user can be improved.

In a possible implementation of the first aspect, a tile in the first map region is a third tile, and the level of the first tile is equal to a level of the third tile.

The third tile displayed in the first map region may be a 2D map.

In a possible implementation of the first aspect, the second tile does not include a 3D model. In this way, the 3D model is not displayed in the second screen sub-region, so that a required map data volume can be further reduced.

In a possible implementation of the first aspect, the first tile includes a 3D model.

In a possible implementation of the first aspect, the method further includes:
enabling or disabling a multi-level display mode in response to a second operation of the user, where a map display region can display tiles of a plurality of levels in the multi-level display mode.

In the foregoing implementation, the user can enable or disable the multi-level display mode, so that map display flexibility can be improved, and user experience can be further improved.

In a possible implementation of the first aspect, the method further includes:
in response to a third operation of the user, enabling or disabling a function of disabling the multi-level display mode in a non-navigation mode, where the map display region can display tiles of a plurality of levels in the multi-level display mode.

In the foregoing implementation, the user can freely choose whether to disable the multi-level display mode in the non-navigation mode, so that map display flexibility can be improved, and user experience can be further improved.

In a possible implementation of the first aspect, the displaying a second interface in response to the first operation includes:
displaying the second interface in response to the first operation when a tilt angle of a map plane to be displayed on the second interface is greater than or equal to a target angle.

In the foregoing implementation, when the tilt angle of the to-be-displayed map plane is greater than or equal to the target angle, the map is displayed in the multi-level display mode. In this way, user experience can be further improved when terminal overheads are ensured.

In a possible implementation of the first aspect, the displaying a second interface in response to the first operation includes:
in response to the first operation, dividing the map display region of a screen into the plurality of screen sub-regions;
obtaining the first tile and the second tile; and
rendering and displaying the second interface based on each first tile and each second tile.

In a possible implementation of the first aspect, the obtaining the first tile and the second tile includes:
determining an identifier of the first tile and an identifier of the second tile; and
obtaining the first tile and the second tile based on the identifier of the first tile and the identifier of the second tile.

In a possible implementation of the first aspect, the determining an identifier of the first tile and an identifier of the second tile includes:
determining, based on a to-be-displayed target level, a geographical range to be displayed in the map display region;
determining, based on the geographical range to be displayed in the map display region, a geographical range to be displayed in the first screen sub-region and a geographical range to be displayed in the second screen sub-region;
determining the level of the first tile and the level of the second tile based on the target level, where the level of the first tile is equal to the target level;
determining the identifier of the first tile based on the geographical range to be displayed in the first screen sub-region and the level of the first tile; and
determining the identifier of the second tile based on the geographical range to be displayed in the second screen sub-region and the level of the second tile.

In a possible implementation of the first aspect, the obtaining the first tile and the second tile includes:
sending a tile request to a server, where the tile request carries the identifier of the first tile and/or the identifier of the second tile; and
receiving a tile that corresponds to the identifier and that is returned by the server.

In a possible implementation of the first aspect, an area of the first screen sub-region is greater than an area of the second screen sub-region. In this way, a high-level tile with a large range can be displayed to the user, so that the user can better obtain map information.

In a possible implementation of the first aspect, the plurality of screen sub-regions further include a third screen sub-region, and the third screen sub-region is located between the first screen sub-region and the second screen sub-region; and
a tile in the third screen sub-region is a fourth tile, and a level of the fourth tile is less than the level of the first tile and is greater than the level of the second tile.

There may be one or more third screen sub-regions.

In the foregoing implementation, when displaying the map, the terminal device may obtain more screen sub-regions through division based on a requirement, so that the map display flexibility can be improved.

According to a second aspect, an embodiment of this application provides a terminal device. The terminal device includes a memory and a processor. The memory is configured to store a computer program, and the processor is configured to perform the method according to any one of the first aspect or the implementations of the first aspect when invoking the computer program.

According to a third aspect, an embodiment of this application provides a computer-readable storage medium. The computer-readable storage medium stores a computer program. When the computer program is executed by a processor, the method according to any one of the first aspect or the implementations of the first aspect is implemented.

According to a fourth aspect, an embodiment of this application provides a computer program product. When the computer program product runs on a terminal device, the terminal device is enabled to perform the method according to any one of the first aspect or the implementations of the first aspect.

According to a fifth aspect, an embodiment of this application provides a chip system. The chip system includes a processor. The processor is coupled to a memory, and the processor executes a computer program stored in the memory to implement the method according to any one of the first aspect or the implementations of the first aspect. The chip system may be a single chip, or a chip module including a plurality of chips.

It may be understood that, for beneficial effects of the second aspect to the fifth aspect, refer to related descriptions in the first aspect. Details are not described herein again.

### BRIEF DESCRIPTION OF DRAWINGS

FIG. 1 is a schematic diagram of a map display interface according to an embodiment of this application;
FIG. 2 is a schematic diagram of another map display interface according to an embodiment of this application;
FIG. 3 is a schematic diagram of a map service system according to an embodiment of this application;
FIG. 4 is a schematic diagram of a tile pyramid model according to an embodiment of this application;
FIG. 5 is a schematic diagram of tile coordinates according to an embodiment of this application;
FIG. 6 is a schematic diagram of a correspondence between a map element and a geometric element type according to an embodiment of this application;
FIG. 7 is a schematic flowchart of a map display method according to an embodiment of this application;
FIG. 8A and FIG. 8B are a schematic diagram of a user interface according to an embodiment of this application;
FIG. 9 is a schematic diagram of another user interface according to an embodiment of this application;
FIG. 10 is a schematic diagram of a tile loading procedure according to an embodiment of this application;
FIG. 11 is a schematic diagram of a screen sub-region division result according to an embodiment of this application;
FIG. 12 is a schematic diagram of a tile determining procedure according to an embodiment of this application;
FIG. 13 is a schematic diagram of a map display effect according to an embodiment of this application;
FIG. 14 is a schematic diagram of another map display effect according to an embodiment of this application;
FIG. 15 is a schematic diagram of a tile display effect according to an embodiment of this application;
FIG. 16 is a schematic diagram of another tile display effect according to an embodiment of this application;
FIG. 17 is a schematic diagram of a rendering model according to an embodiment of this application;
FIG. 18 is a schematic diagram of a rendering principle according to an embodiment of this application;
FIG. 19 is a schematic diagram of module interaction according to an embodiment of this application;
FIG. 20 is a schematic diagram of another rendering principle according to an embodiment of this application;
FIG. 21 is a schematic diagram of other module interaction according to an embodiment of this application;
FIG. 22 and FIG. 23 are schematic diagrams of some other rendering principles according to embodiments of this application;
FIG. 24 is a schematic flowchart of another map display method according to an embodiment of this application;
FIG. 25 is a schematic diagram of another tile loading procedure according to an embodiment of this application;
FIG. 26 is a schematic diagram of still another map display effect according to an embodiment of this application;
FIG. 27 is a schematic diagram of still another tile display effect according to an embodiment of this application;
FIG. 28 is a schematic diagram of a structure of a map display apparatus according to an embodiment of this application; and
FIG. 29 is a schematic diagram of a structure of a terminal device according to an embodiment of this application.

### DESCRIPTION OF EMBODIMENTS

The following describes embodiments of this application with reference to accompanying drawings in embodiments of this application. Terms used in implementations in embodiments of this application are merely used to explain specific embodiments of this application, but are not intended to limit this application.

When an electronic map is displayed, required map data is usually downloaded in real time, and then rendered and displayed. Richness of the electronic map is closely related to a map data volume. A larger map data volume indicates higher traffic consumption of a terminal device and more rendering overheads. In this way, power consumption of the terminal device is also higher.

Most current electronic maps can provide both a two-dimensional (two-dimensional, 2D) map and a 3D map. When the 3D map is displayed, a larger tilt angle of a map plane indicates a larger field of view displayed on the map, in other words, a user can view a farther place on the map. This requires a larger map data volume, resulting in more traffic, power consumption, and rendering overheads.

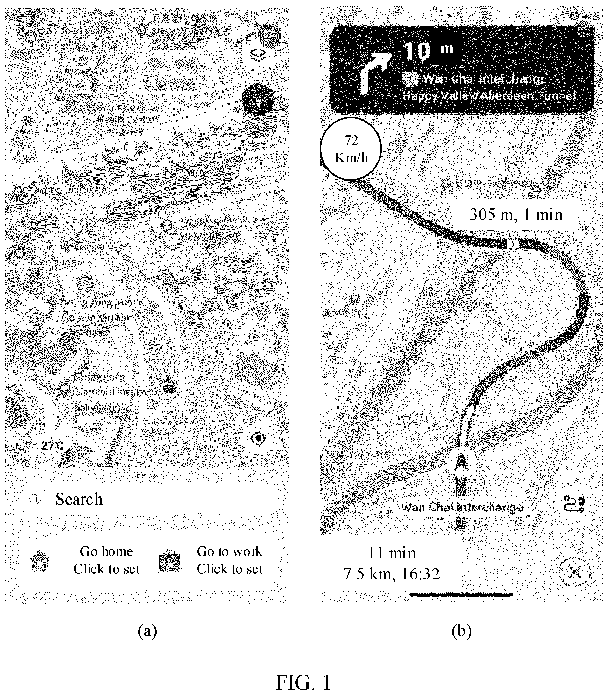

To reduce the traffic, power consumption, and rendering overheads required for displaying the 3D map, with reference to FIG. 1, a related technical solution is to reduce the tilt angle of the map plane, so that no more map data needs to be loaded in a remote region (namely, an end of the field of view) of the map, and therefore the required map data volume is reduced. (a) in FIG. 1 shows a 3D map display interface in a non-navigation mode. In the non-navigation mode, a user may increase a tilt angle of a map plane by performing a related operation (for example, an operation of sliding down with two fingers), to increase a field of view displayed on a map. However, a maximum tilt angle that can be changed by the user is limited to a small range, (a) in FIG. 1 shows a 3D map display interface in a navigation mode. As shown in (b) in FIG. 1, in the navigation mode, an electronic map automatically uses a small map plane tilt angle in a navigation process, to reduce a required map data volume.

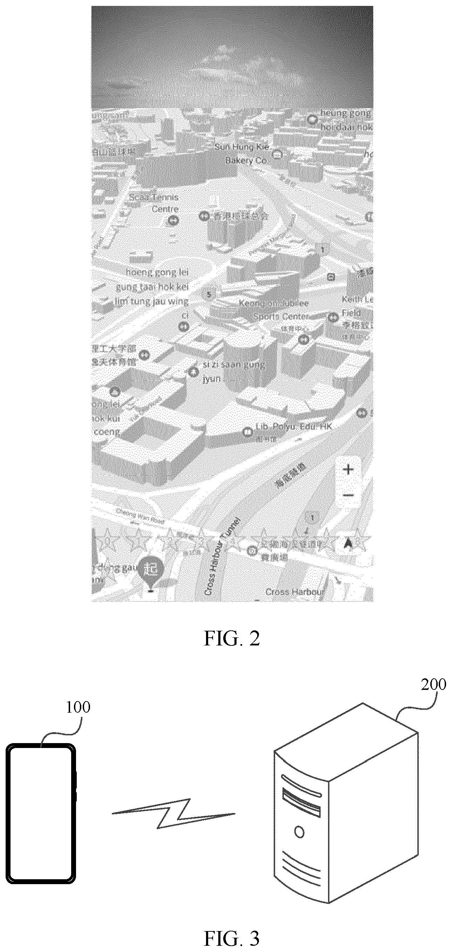

With reference to FIG. 2, another related technical solution is that when the tilt angle of the map plane reaches a specific angle, a remote region of the map is replaced with a sky color, so that no more map tile data needs to be loaded for the remote region, and therefore the required map data volume is reduced.

For the foregoing two solutions, in the first solution, specific field of view display is sacrificed when the tilt angle of the map plane is reduced. However, the field of view display is very important in use of the map. Especially in navigation, a large field of view helps the user learn more road condition information in front of the user. Consequently, a small field of view affects use experience of the user. In the second solution, the sky color is used to replace map information of the remote region, and the user cannot view map data of the remote region. This also affects the use experience of the user.

Based on this, embodiments of this application provide a map display method. A map display region of a screen is divided in a map display process, so that map tile data of a target level is loaded in a lower screen region for displaying a nearby region of a map, and map tile data of a level lower than the target level is loaded in an upper screen region for displaying a remote region of the map. In this way, traffic, power consumption, and rendering overheads are reduced, and the electronic map can have larger field of view display and better use experience.

A system in embodiments of this application is first described. FIG. 3 is a schematic diagram of a map service system according to an embodiment of this application. As shown in FIG. 3, the map service system may include a terminal device 100 and a server 200.

The terminal device 100 may be an electronic device having display, calculation, and network access functions. For example, the terminal device 100 may be a device that can display a map, for example, a mobile phone, a vehicle-mounted terminal, an intelligent wearable device, or a personal computer. The intelligent wearable device may include a smart watch, smart glasses, and the like. The personal computer may include a tablet computer, a notebook computer, a desktop computer, and the like. In FIG. 3, an example in which the terminal device 100 is a mobile phone is used for description.

A user may use a map function through map-related software such as an application (application, app), an applet, or a system function on the terminal device 100. The map-related app may include various map apps, browser apps, game apps, positioning apps, and the like. The applet may also include various map applets, browser applets, game applets, positioning applets, and the like. For ease of description, the following uses a map app as an example to describe the technical solutions of this application.

The map-related software on the terminal device 100 may provide services such as positioning, POI query, navigation, and route planning by using the displayed map. A type of the map displayed by the terminal device 100 may include a 2D map, a 3D map, a thermodynamic diagram, a satellite map, a topographic map, an indoor map, a bus map, a customized layer, and the like.

The server 200 is configured to provide map data. The terminal device 100 may obtain to-be-displayed map data from the server 200, and then perform rendering and display.

Specifically, the map data in the server 200 may be a series of tiles (tile) generated based on a tile map technology. The terminal device 100 may determine a required tile based on a to-be-displayed geographical range, and perform rendering and splicing after downloading, to display a complete map.

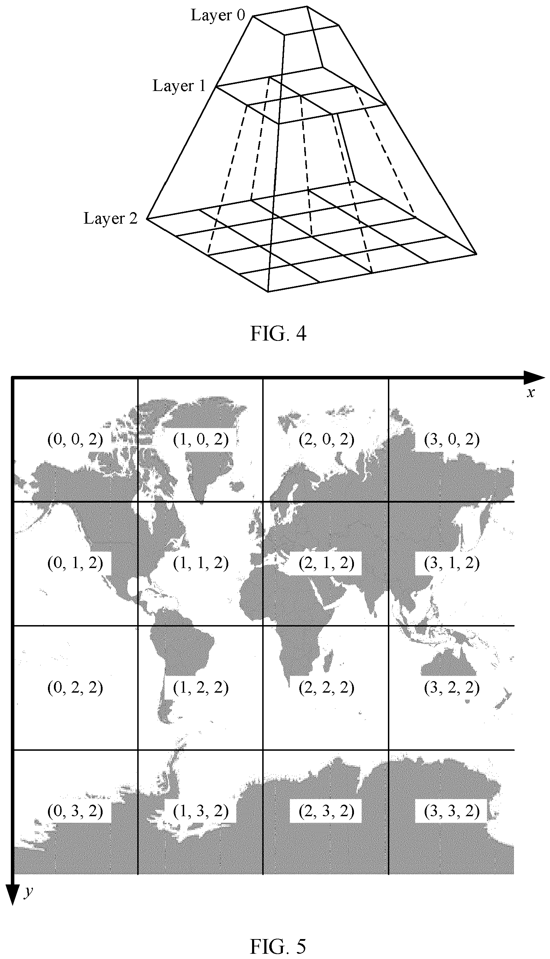

In the tile map technology, a large-sized map (for example, a world map) is divided into a series of map slices of an equal size (for example, 256*256 pixels) through multi-scale hierarchical cutting. Each map slice obtained through division is referred to as a tile (tile). These tiles form a pyramid model shown in FIG. 4.

The tile pyramid model is a multi-resolution hierarchical model. From a bottom layer to a top layer of the tile pyramid model, a resolution is lower, but an indicated geographical range remains unchanged. The world map is used as an example. As shown in FIG. 4, except for a bottom layer, a tile at any layer is divided into four square tiles, to form higher-layer tiles of the tile. In other words, a higher tile level indicates a larger quantity of tiles that form the world map and more detailed displayed content of the map. A quantity of tile layers included in the tile pyramid model may be determined based on a required map detail degree. For example, the world map may be divided into 20 levels of tiles. FIG. 4 shows an example of tile maps of the top three layers.

As shown in FIG. 4, a lowest tile level is 0, and in this case, the world map includes one tile. A tile map whose level is 1 includes four tiles, a tile map whose level is 2 includes 16 tiles, and by analogy, a tile map whose level is n includes 4ⁿ tiles.

Tiles at each layer form a tile matrix. A tile can be uniquely determined based on a level number, a row number, and a column number of the tile. FIG. 5 is a schematic diagram of coordinates of tiles at the second layer. As shown in FIG. 5, the upper left corner of the world map may be used as an origin to number each tile. Each tile has unique coordinates of a level of the tile, where a coordinate x corresponds to a row number, and a coordinate y corresponds to a column number. During numbering, a coordinate z may also be used to represent the level of the tile. As shown in FIG. 5, a value of the coordinate z of each tile at the second layer is 2.

It may be understood that a numbering manner of the tile is not limited to the foregoing coordinate manner, and another manner may be used. For example, a three-digit number manner is used for representation. The first digit may represent the level, the second digit may represent the row number of the tile, and the third digit may represent the column number of the tile. In addition, the origin of a tile coordinate system is not limited to the upper left corner of the world map, or may be the lower left corner or the central location of the world map. This is not particularly limited in embodiments of this application.

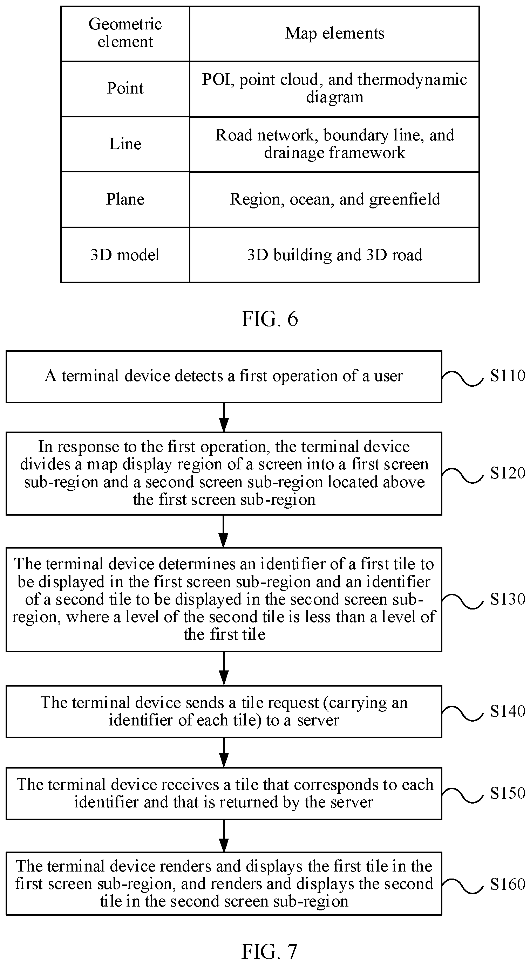

The tile includes a group of layers, and each layer includes some geometric elements. As shown in FIG. 6, the geometric elements in the tile may include points, lines, planes, and 3D models. Map elements described by geometric elements of a point type may include a POI, a point cloud, a thermodynamic diagram, and the like. Map elements described by geometric elements of a line type may include a road network (including a road, a railway, and the like), a boundary line, a drainage framework, and the like. Map elements described by geometric elements of a plane type may include a region, an ocean, a greenfield, and the like. Map elements described by geometric elements of a 3D model type may include a 3D building, a 3D road, and the like.

Geometric element types of map elements included in tiles of different levels may be different. For example, a low-level tile may include map elements of the line type and the plane type, and a high-level tile may include map elements of the point type, the line type, the plane type, and the 3D model type.

In this embodiment, when displaying a 2D map, the terminal device 100 may determine a to-be-displayed geographical range based on a size of a map display region on a screen, a current location of the terminal device 100, and a to-be-displayed map tile level (referred to as a target level herein), then determine coordinates of a tile of the target level that can cover the geographical range, download the tile corresponding to the determined tile coordinates from the server 200, and render the downloaded tile and display the tile in the map display region.

A 3D map includes a large quantity of map elements. In addition, as a tilt angle of a map plane increases, an involved geographical range is also larger, in other words, more map information needs to be displayed. To reduce a required map data volume and ensure that the electronic map can have larger field of view display and better visual experience, in this embodiment, when displaying the 3D map, the terminal device 100 may divide a map display region on a screen into a plurality of vertically arranged screen sub-regions, and display tiles of different levels in different screen sub-regions. A tile map of a target level may be displayed in a bottom screen sub-region, and levels of tiles displayed on the screen sub-regions may be gradually reduced from bottom to top.

The following separately describes the map display method in this application by using two screen sub-regions obtained through division and three screen sub-regions obtained through division as examples.

FIG. 7 is a schematic flowchart of a map display method according to an embodiment of this application. As shown in FIG. 7, the method may include the following steps.

Step S 110: A terminal device detects a first operation of a user.

Specifically, the first operation may trigger the terminal device to display a 3D map, and the terminal device may detect, in a process of displaying a 2D map or a 3D map, the first operation performed by the user for a map display interface.

When the terminal device displays the 2D map, the first operation that can trigger the terminal device to display the 3D map may be an operation of enabling a navigation mode. For example, after selecting a route on a 2D map display interface, the user taps a "start navigation" control. Then, a map app enters the navigation mode, and automatically uses the 3D map to perform navigation.

Alternatively, the first operation may be a preset gesture operation. For example, the user may change a tilt angle of a map plane on a 2D map display interface by using a multi-touch slide-down operation or a multi-touch slide-up operation. When the tilt angle of the to-be-displayed map plane is greater than 0, the terminal device may respond to the operation of the user to display a 3D map corresponding to the tilt angle.

It may be understood that the preset gesture operation is not limited to the multi-touch slide-down operation and multi-touch slide-up operation, and may alternatively be another operation, for example, an air gesture operation. This is not particularly limited in this embodiment.

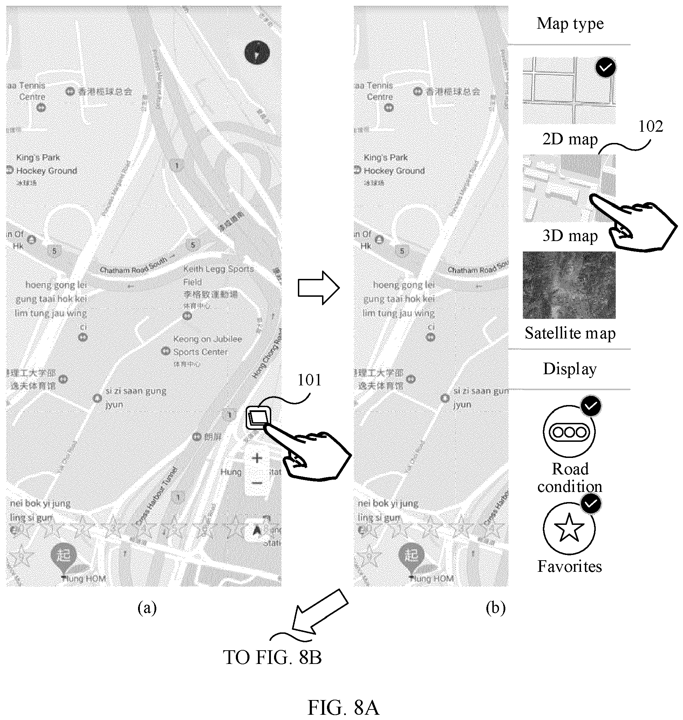

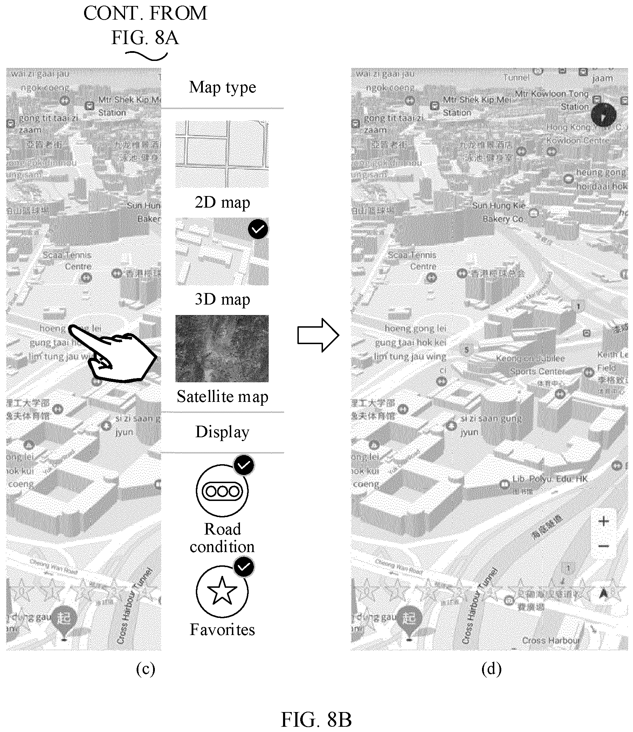

Alternatively, the first operation may be a tapping operation performed by the user on the map display interface for a target control. FIG. 8A and FIG. 8B are a schematic diagram of a user interface according to an embodiment of this application. As shown in (a) in FIG. 8A, the map display interface may provide a "layer selection" control 101. When the map display interface displays the 2D map, the user may tap the control. As shown in (b) in FIG. 8A, a sidebar corresponding to the "layer selection" control 101 may pop up on the map display interface, where the sidebar includes a map type selection bar. The user may select, from the popped map type selection bar, a control 102 corresponding to "the 3D map". As shown in (c) in FIG. 8B, a map displayed on the map display interface is switched from the 2D map to the 3D map. Then, as shown in (c) and (d) in FIG. 8B, the user may tap a region outside the sidebar to close the sidebar.

The map type selection bar may further include an option of another map type, for example, a satellite map shown in (b) in FIG. 8A. In addition, the sidebar corresponding to the "layer selection" control 101 may further provide another function option, for example, a "road condition" control and a "favorites" control that are provided in a display bar shown in (b) in FIG. 8A. The "road condition" control is used to control whether the map display interface displays a road condition, and the "favorites" control is used to control whether the map display interface displays a favorite place. In addition, an interface corresponding to the "layer selection" control 101 is not limited to the sidebar, and may alternatively be in a form of pop-up window. Types of map types and function options that are specifically included in the sidebar corresponding to the "layer selection" control 101, and the interface corresponding to the "layer selection" control 101 are not particularly limited in this embodiment.

When the terminal device displays the 2D map, the first operation that can trigger the terminal device to display the 3D map may also be the foregoing preset gesture operation. For example, the user may change a tilt angle of a map plane on a 3D map display interface by using a multi-touch slide-down operation or a multi-touch slide-up operation. When the tilt angle of the to-be-displayed map plane is greater than 0, the terminal device may respond to the operation of the user to display a 3D map corresponding to the tilt angle.

The first operation may alternatively be a map zooming operation or a map panning operation performed by the user on a 3D map display interface.

It should be noted that various operations input by the user in this embodiment of this application may be the foregoing manual input operation, or may be a voice instruction input operation. For ease of description, the manual input operation is used as an example for description in this embodiment of this application.

As described above, in this embodiment, when the 3D map is displayed, tiles of a plurality of levels may be displayed in a map display region, in other words, a multi-level display manner is used in the map display region. To meet different requirements of the user, in this embodiment, a switch function of a multi-level display mode may be provided, and the user may enable or disable the multi-level display mode by using the function.

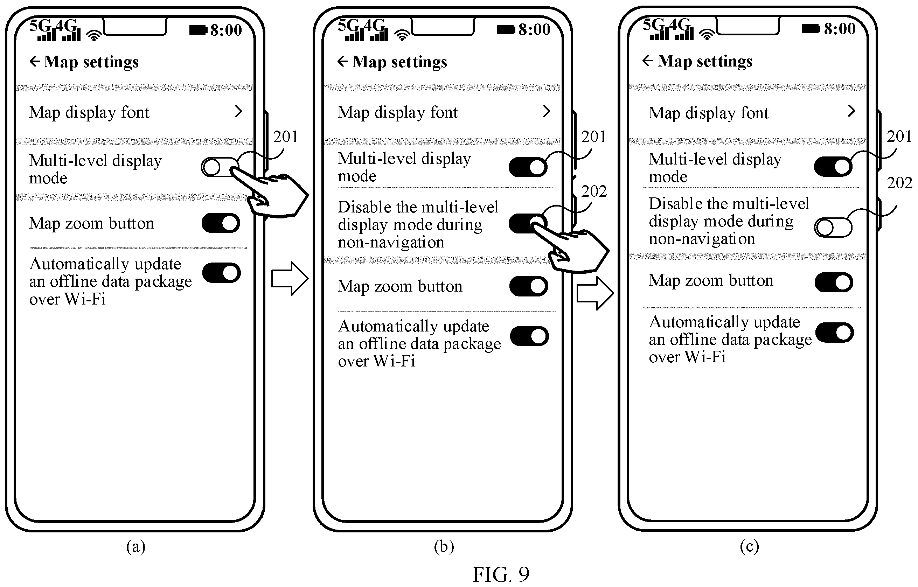

FIG. 9 is a schematic diagram of another user interface according to an embodiment of this application. As shown in FIG. 9, during specific implementation, a switch control 201 of the "multi-level display mode" may be provided in a map setting interface. The user may tap the switch control 201 to choose to enable or disable the multi-level display mode. To be specific, after receiving a tapping operation (referred to as a second operation herein) performed by the user on the switch control 201, the terminal device may enable the multi-level display mode when the multi-level display mode is in a disabled state, and may disable the multi-level display mode when the multi-level display mode is in an enabled state. FIG. 9 shows an example of a process in which the user switches the multi-level display mode from the disabled state (refer to (a) in FIG. 9) to the enabled state (refer to (b) in FIG. 9).

It may be understood that an implementation of the switch function of the "multi-level display mode" is not limited to the switch control 201, and may alternatively be another manner, for example, by using two single-option controls. This is not particularly limited in this embodiment.

Considering that a map data volume in a non-navigation mode is small, to better meet different requirements of the user, in this embodiment, a switch function of disabling the multi-level display mode in the non-navigation mode may be provided.

During specific implementation, as shown in FIG. 9, a switch control 202 of "disabling the multi-level display mode during non-navigation" may be provided in the map setting interface. The user may tap the switch control 202 (referred to as a third operation herein) to choose whether to disable the multi-level display mode in the non-navigation mode. FIG. 9 shows an example of a process in which the user switches the function of "disabling the multi-level display mode in the non-navigation mode" from an enabled state (refer to (b) in FIG. 9) to a disabled state (refer to (c) in FIG. 9). When the switch control 202 is in an on state, it indicates that the 3D map cannot be displayed in the multi-level display mode in the non-navigation mode. When the switch control 202 is in an off state, it indicates that the 3D map can be displayed in the multi-level display mode in the non-navigation mode.

In an optional implementation, as shown in (a) and (b) in FIG. 9, the switch control 202 may be displayed when the switch control 201 is in an on state, and is not displayed when the switch control 201 is in an off state. When the switch control 202 is displayed, as shown in (b) in FIG. 9, the switch control 202 may be in the off state or the on state by default.

In addition, the map setting interface may further include another map setting option, for example, a "map display font" setting option shown in FIG. 9, a switch control used to control whether to display a "map zoom button" on the map display interface, and a switch control used to control whether to "automatically update an offline data package over Wi-Fi". Content of the map setting interface is not particularly limited in this embodiment.

It may be understood that, implementations of the switch function of the multi-level display mode and the switch function of disabling the multi-level display mode in the non-navigation mode are not limited to the foregoing manner of setting a switch control, and may alternatively be another manner. For example, a gesture recognition manner may be used. When a first target gesture operation (namely, a second operation) performed by the user on the map display interface is detected, the multi-level display mode is enabled. When a second target gesture operation (namely, a third operation) performed by the user on the map display interface is detected, the multi-level display mode is disabled in the non-navigation mode.

When the multi-level display mode is enabled, the terminal device may display the 3D map in the multi-level display manner. Considering that a small tilt angle of the map plane requires a small map data volume, in this embodiment, to improve user experience, the 3D map may be displayed in the multi-level display manner when the tilt angle of the to-be-displayed map plane reaches a target angle.

The target angle may be set based on an actual requirement, for example, may be 10 degrees. This is not particularly limited in this embodiment.

Step S120: In response to the first operation, the terminal device divides the map display region of a screen into a first screen sub-region and a second screen sub-region located above the first screen sub-region.

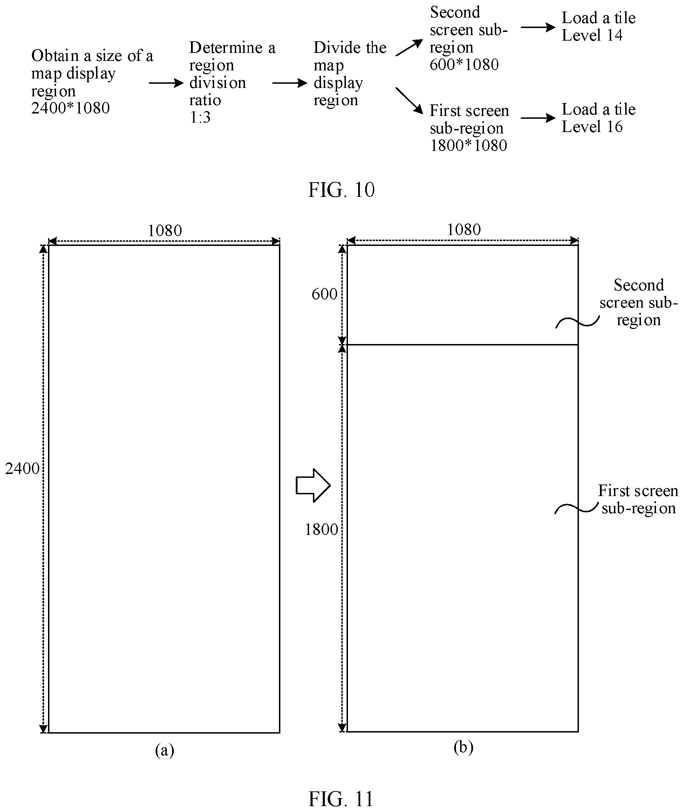

When the 3D map is displayed in the multi-level display manner, as described above, tiles of different levels may be displayed in different screen sub-regions. Refer to FIG. 10 and (a) in FIG. 11. When screen sub-regions are obtained through division, the terminal device may determine a size (for example, 2400*1080 pixels herein) of the map display region on the screen, determine a region division ratio (for example, 1:3 herein), and then divide the map display region based on the region division ratio. As shown in (b) in FIG. 11, the terminal device may obtain an upper screen sub-region and a lower screen sub-region: the first screen sub-region (1800*1080 pixels) and the second screen sub-region (600*1080 pixels) located above the first screen region.

The map display region may be all or a part of region on the screen. For example, in a split screen mode, the map display region is with a size of one of split screen regions. For ease of description, in this embodiment of this application, an example in which the map display region is an entire region of the screen is used for description.

A size of the map display region may be represented by using a screen size, or may be represented by using a screen resolution shown in FIG. 10 and FIG. 11. This is not particularly limited in this embodiment.

The region division ratio may be a preset fixed ratio. For example, the region division ratio may be preset to 1:3 shown in FIG. 10 or another ratio.

The region division ratio may alternatively be determined based on the size of the map display region. During specific implementation, a correspondence (referred to as a first correspondence) between a size of the map display region and a quantity of screen sub-regions obtained through division and a correspondence (referred to as a second correspondence) between a quantity of screen sub-regions obtained through division and a screen division ratio may be preset, and then the region division ratio is determined based on the two correspondences.

For example, in the first correspondence, a height range and a width range of a corresponding map display region may be set for each quantity of screen sub-regions obtained through division. For a small screen, a map display region is correspondingly small, and in this case, two screen sub-regions may be obtained through division. For a large screen, a map display region is correspondingly large, and in this case, three or more screen sub-regions may be obtained through division. In FIG. 10 and FIG. 11, an example in which two screen sub-regions are obtained through division is used for description.

In the second correspondence, a screen division ratio corresponding to each quantity of screen sub-regions obtained through division may be set based on a requirement. For example, as shown in FIG. 10, when there are two screen sub-regions, a ratio (namely, a screen division ratio) of a size of the upper screen sub-region to a size of the lower screen sub-region may be 1:3.

To improve use experience of the user, when the screen sub-regions are obtained through division, an area of the first screen sub-region is greater than an area of the second screen sub-region. In this way, a high-level tile with a large range can be displayed to the user, so that the user can better obtain map information.

In addition, when the map is displayed, the map may be displayed in a portrait mode or in a landscape mode. When the map is displayed in the portrait mode, as shown in FIG. 10 and

FIG. 11, a size of the first screen sub-region is 1800* 1080 pixels, and a size of the second screen sub-region is 600*1080 pixels. When the map is displayed in the landscape mode, a size of the first screen sub-region is 2400*810 pixels, and a size of the second screen sub-region is 2400*270 pixels. For ease of description, in this embodiment, an example in which the map is displayed in the portrait mode is used for description.

Step S130: The terminal device determines an identifier of a first tile to be displayed in the first screen sub-region and an identifier of a second tile to be displayed in the second screen sub-region, where a level of the second tile is less than a level of the first tile.

After the screen sub-regions are obtained through division, in this embodiment, the terminal device may first determine a tile to be displayed in each screen sub-region, and then obtain the related tile. Each tile may have a unique identifier. When determining a tile, the terminal device may specifically determine an identifier of the tile.

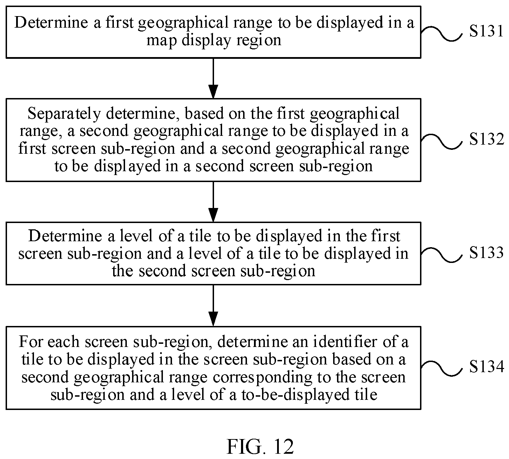

Specifically, in some embodiments, as shown in FIG. 12, that the terminal device determines the tile to be displayed in each screen sub-region (step S130) may include the following steps.

Step S131: Determine a first geographical range to be displayed in the map display region.

During specific implementation, a to-be-displayed target level and coordinates of a target central point (namely, coordinates of a central point of a geographical range to be displayed in the map display region) may be first determined, and then a geographical range (namely, the first geographical range) to be displayed by the terminal device is determined based on the target level, the coordinates of the target central point, and the size of the map display region.

The target level is a map tile level of a 2D map corresponding to the to-be-displayed 3D map, namely, a level of a tile displayed on the 2D map when the to-be-displayed 3D map is switched to the 2D map. The target level may be preset, or may be determined based on an operation of the user or a preset map display policy. When the map app is started, a preset level may be used as a target level for the first frame of map displayed by the map app. After the user performs a zooming operation, the terminal device may determine a target level based on a current level and the zooming operation of the user. In a navigation process, the terminal device may determine a target level based on a current location of the terminal device and the preset map display policy.

The coordinates of the target central point are geographical location coordinates of a central point of the map display region, and may be determined based on the current location of the terminal device, an operation of the user, or the preset map display policy. When the map app is started, coordinates of a target central point of the first frame of map displayed by the map app may be the current location of the terminal device. After the user performs a map panning operation, the terminal device may determine coordinates of a target central point based on coordinates of a current central point and the map panning operation of the user. In the navigation process, the map app may determine coordinates of a target central point based on the current location of the terminal device, coordinates of a current central point, and the preset map display policy.

That the map app is started to display the first frame of map is used as an example. In this case, the terminal device may use the preset level (for example, level 16) as the target level, use the current location of the terminal device as the coordinates of the target central point, and then determine the first geographical range based on the target level, the coordinates of the target central point, and the screen size.

The current location of the terminal device may be represented by using a longitude and latitude manner or another coordinate representation manner, and the first geographical range may be represented by using geographical location coordinates corresponding to four vertices of the map display region.

Step S132: Separately determine, based on the first geographical range, a second geographical range to be displayed in the first screen sub-region and a second geographical range to be displayed in the second screen sub-region.

After the first geographical range corresponding to the entire map display region is determined, a geographical range (namely, a second geographical range) to be displayed in each screen sub-region may be determined based on a division rule of the first screen sub-region and the second screen sub-region. For example, the region division ratio of the second screen sub-region to the first screen sub-region is 1:3, and correspondingly, a ratio of a size of the second geographical range corresponding to the second screen sub-region to a size of the second geographical range corresponding to the first screen sub-region is 1:3. In other words, the first geographical range is divided based on the ratio of 1:3 in a manner similar to the screen sub-region division rule, to obtain the second geographical range corresponding to the first screen sub-region and the second geographical range corresponding to the second screen sub-region.

Specifically, geographical location coordinates of two ends of a boundary line between the first screen sub-region and the second screen sub-region may be determined based on the geographical location coordinates of the four vertices of the map display region. In this case, the second geographical range corresponding to the first screen sub-region may be represented by using geographical location coordinates of two vertices at the lower end of the map display region and the two ends of the boundary line, and the second geographical range corresponding to the second screen sub-region may be represented by using geographical location coordinates of two vertices at the upper end of the map display region and the two ends of the boundary line.

Step S 133: Determine a level of a tile to be displayed in the first screen sub-region and a level of a tile to be displayed in the second screen sub-region.

In step S133, when a level of a tile corresponding to each screen sub-region is determined, the level of the tile corresponding to the first screen sub-region may be equal to the target level, where the target level is a level corresponding to the first geographical range in step S 131, for example, level 16 shown in FIG. 10; and the level of the tile corresponding to the second screen sub-region may be several levels (referred to as a first preset level herein) lower than the target level. For example, as shown in FIG. 10, the level of the tile corresponding to the second screen sub-region is level 14, in other words, the first preset level is two levels.

In some embodiments, considering that a 3D model requires a large map data volume, to further reduce the required map data volume, an upper limit level may be set for the level of the tile to be displayed in the second screen sub-region, in other words, the level of the tile corresponding to the second screen sub-region may be lower than a preset level (referred to as a second preset level herein). A tile corresponding to the second preset level includes a 3D model, and a tile with a level one level lower than the second preset level does not include a 3D model. For example, when the level of the tile corresponding to the first screen sub-region is level 18, assuming that the first preset level is two levels, and the second preset level is level 16, according to the rule that the level of the tile corresponding to the second screen sub-region is two levels lower than the level of the tile corresponding to the first screen sub-region, the level of the tile corresponding to the second screen sub-region is level 16. Considering that a tile of level 16 includes a 3D model, and the 3D model requires a large map data volume, when the level of the tile corresponding to the first screen sub-region is level 18, the level of the tile corresponding to the second screen sub-region is set to level 15. A tile of level 15 does not include a 3D model, and therefore the map data volume can be reduced.

In other words, when the level of the tile corresponding to the first screen sub-region is lower than level 18, the level of the tile corresponding to the second screen sub-region is two levels lower than the level of the tile corresponding to the first screen sub-region; when the level of the tile corresponding to the first screen sub-region is greater than or equal to level 18, the level of the tile corresponding to the second screen sub-region is level 15. For ease of description, an example in which the second preset level is level 16 is used subsequently for description. In other words, a tile with a level higher than or equal to level 16 includes a 3D model, and a tile with a level lower than level 16 does not include a 3D model.

Step S134: For each screen sub-region, determine an identifier of the tile to be displayed in the screen sub-region based on the second geographical range corresponding to the screen sub-region and the level of the to-be-displayed tile.

According to a tile division rule, a corresponding tile identifier determining algorithm is set in the app of the terminal device. After the geographical range to be displayed in each screen sub-region and the level of the tile to be displayed in each screen sub-region are determined, for each screen sub-region, an identifier of a tile that can cover the second geographical range may be determined based on the second geographical range corresponding to the screen sub-region, the level of the tile, and the tile identifier determining algorithm. The identifier of the tile may be a tile number numbered by using tile coordinates or another numbering manner.

During specific implementation, for each screen sub-region, the terminal device may determine, based on geographical location coordinates of four vertices of the second geographical range corresponding to the screen sub-region, the level of the tile to be displayed in the screen sub-region, and the tile identifier determining algorithm, identifiers of tiles (referred to as tiles 1 herein) in which the four vertices are located; then determine, based on the identifiers of the four tiles 1, identifiers of tiles (referred to as tiles 2 herein) located between the four tiles; and combine the identifiers of the tiles 1 and the identifiers of the tiles 2 between the tiles 1, to obtain identifiers of tiles to be displayed in the screen sub-region.

It may be understood that there is no strict time sequence execution relationship between step S133 and step S131. Step S133 may be performed after step S131, or may be performed before step S131, or may be performed in parallel with step S131. This is not particularly limited in this embodiment.

S140: The terminal device sends a tile request to the server.

After identifiers of tiles corresponding to all screen sub-regions are determined, the identifiers of the tiles may be carried in the tile request, and then the request is sent to the server to download the corresponding tiles.

The tile request may further carry other information of the tile. For example, the tile request may carry type information of the tile. A value of the type parameter may indicate a geometric element type of the requested tile. In other words, when the tile is requested, all or a part of geometric element types included in the tile may be requested.

For example, the tile request is "http://bj 04maptest04.hwcloudtest.cn:9080/temp/terrainvector/
V1?tileType=20&x={x}&y={y}&z={z}", where "http://bj04maptest04.hwcloudtest.cn:9080/ temp/terrainvector/V1" represents an address of the server, "tileType=20" represents the type parameter, and "x={x}&y={y}&z={z}" represents the identifier of the tile. For example, a value of the type parameter tileType herein is 20, indicating that a point, a line, a plane, and a 3D model included in the tile are requested. For example, a level of the requested tile is level 16, and geometric elements in the tile include a point, a line, a plane, and a 3D model. In this case, when the value of tile Type is 20, all points, lines, planes, and 3D models included in the tile are requested.

It may be understood that, in a process in which the user uses the map app, the map app may store a recently downloaded tile in a local buffer, so that the tile can be quickly obtained when the tile is subsequently used again. Therefore, in some implementations, after the identifier of the tile corresponding to each screen sub-region is determined, whether the corresponding tile exists in the local buffer may be first checked. For a tile existing in the buffer, the tile may not need to be requested from the server, so that data traffic is reduced and download efficiency is improved. For example, N tiles are required to be displayed in the map display region, and M tiles in the N tiles exist in the buffer. In this case, when tiles are requested from the server, remaining N-M tiles may be requested.

Step S150: The terminal device receives a tile that corresponds to each identifier and that is returned by the server.

After receiving the tile request, the server may determine the corresponding tile based on the identifier of the tile carried in the tile request, and then return the tile corresponding to each identifier to the terminal device. Correspondingly, the terminal device may receive the tile that corresponds to each identifier and that is returned by the server.

Step S160: The terminal device renders and displays the first tile in the first screen sub-region, and renders and displays the second tile in the second screen sub-region.

Specifically, after the tile corresponding to each screen sub-region is obtained, the first tile may be rendered in the first screen sub-region and the second tile may be rendered in the second screen sub-region by a graphics processing unit (graphics processing unit, GPU) by invoking a rendering tool, for example, an open graphics library (open graphics library, OpenGL), and then the first tile and the second tile are displayed in the map display region on the screen.

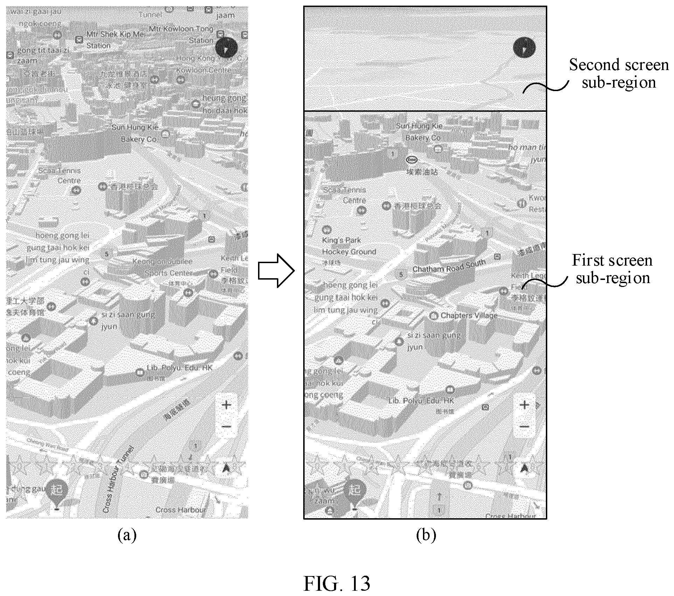

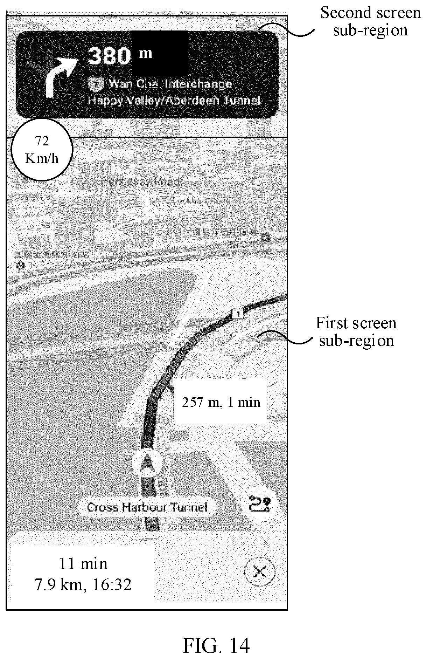

FIG. 13 is a schematic diagram of comparison of map display effects before and after the multi-level display manner is used in the non-navigation mode. As shown in (a) in FIG. 13, when the 3D map is not displayed in the multi-level display manner, a large amount of map data is loaded for a remote region of the map. Especially, 3D buildings are densely distributed. As shown in (b) in FIG. 13, after the 3D map is displayed in the multi-level display manner, a level of a tile displayed in a nearby region (corresponding to the first screen sub-region) of the map remains unchanged, and a level of a tile displayed in a remote region (corresponding to the second screen sub-region) of the map is reduced, where no 3D building is included in the remote region. FIG. 14 is a schematic diagram of a map display effect after the multi-level display manner is used in the navigation mode. As shown in FIG. 14, after the 3D map is displayed in the multi-level display manner, a level of a tile displayed in a remote region (corresponding to the second screen sub-region) of the map is lower than a level of a tile displayed in a nearby region (corresponding to the first screen sub-region) of the map, where no 3D building is included in the nearby region. In this way, map data loaded by the terminal device is greatly reduced, and therefore traffic, power consumption, and rendering overheads required for displaying the 3D map are effectively reduced. Therefore, the terminal device can support 3D map display requirements of various sizes of fields of view, and can also display map data in the remote region to the user, so that the use experience of the user can also be improved.

In this embodiment, an obtained geographical range covered by the tile corresponding to each screen sub-region is usually greater than the geographical range to be displayed in the screen sub-region. Therefore, during rendering, the tile corresponding to the first screen sub-region and the tile corresponding to the second screen sub-region may exceed the boundary line between the first screen sub-region and the second screen sub-region, in other words, map display regions required by tiles corresponding to the two screen sub-regions may overlap. In this case, the tile corresponding to the second screen sub-region may be displayed in an overlapping region, or the tile corresponding to the first screen sub-region may be displayed in the overlapping region.

For the case in which the tile corresponding to the first screen sub-region is displayed in the overlapping region, because a map display region corresponding to a high-level tile may be larger, as much map content as possible can be displayed to the user when the map data volume is reduced, and therefore the use experience of the user can be improved to some extent.

During specific implementation, a template testing technology in OpenGL may be used to render the tiles corresponding to the screen sub-regions from bottom to top. Alternatively, the template testing technology may not be used, and a conventional repeated drawing manner is used to render the tiles corresponding to the screen sub-regions from top to bottom. In this way, the tile corresponding to the first screen sub-region is displayed in the overlapping region.

When the conventional repeated drawing manner is used, if the tiles corresponding to the screen sub-regions are rendered from top to bottom, to be specific, the tile corresponding to the second screen sub-region is first rendered, and then the tile corresponding to the first screen sub-region is rendered, when the map display regions of the tiles corresponding to the first screen sub-region and the second screen sub-region overlap, the tile corresponding to the first screen sub-region may be overlaid above the tile corresponding to the second screen sub-region, so that the tile corresponding to the first screen sub-region is displayed in the overlapping region.

Drawing content of a to-be-drawn image (for example, a tile) can be flexibly controlled by using the template testing technology. In this embodiment, during tile drawing, the template testing technology may be used to prevent repeated tile drawing in the map display region. In this way, when the tiles corresponding to the screen sub-regions are rendered from bottom to top, to be specific, the tile corresponding to the first screen sub-region is first rendered, and then the tile corresponding to the second screen sub-region is rendered, if the map display regions of the tiles corresponding to the first screen sub-region and the second screen sub-region overlap, the tile corresponding to the first screen sub-region has been drawn in the overlapping region when the tile corresponding to the second screen sub-region is drawn, and no other tile is repeatedly drawn in the overlapping region. Therefore, the tile corresponding to the first screen sub-region may be finally displayed in the overlapping region.

The conventional repeated drawing manner is simple and easy to implement. The drawing manner based on the template testing technology can reduce a drawing data volume and improve rendering efficiency. During specific implementation, the two manners may be selected based on requirements. This is not particularly limited in this embodiment.

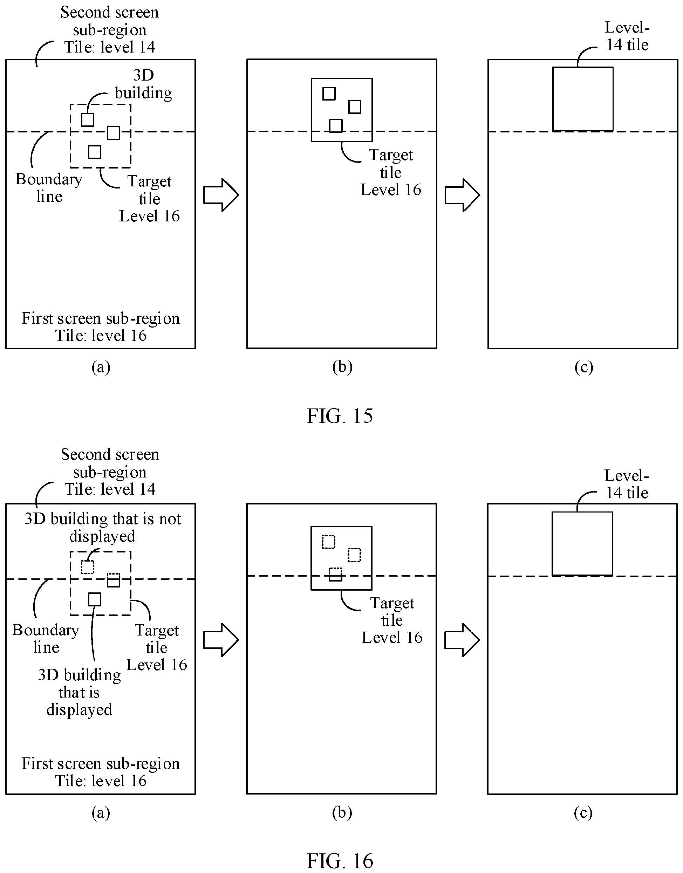

Based on a manner of rendering tiles from top to bottom, the tile corresponding to the first screen sub-region may be displayed across the boundary line between the first screen sub-region and the second screen sub-region. For a tile (referred to as a target tile herein) displayed across the boundary line (for example, a level of the target tile is level 16), there is a 3D building in the target tile, and the tile may present a display effect shown in FIG. 15 on the map display interface. There may be a plurality of target tiles, and one target tile is used as an example for description in FIG. 15.

With reference to FIG. 15, as the current location of the terminal device moves, the geographical range displayed in the map display region changes, and a tile movement effect is presented on the map display interface. When the target tile corresponding to the first screen sub-region moves from bottom to top, as shown in (a) and (b) in FIG. 15, 3D buildings in the target tile are gradually displayed in the second screen sub-region. As shown in (c) in FIG. 15, when the target tile completely moves to the upper second screen sub-region, the second screen sub-region loads and displays a corresponding low-level tile. For example, a level of the low-level tile is level 14. In this case, there is no 3D building in the low-level tile. Therefore, a case in which the buildings suddenly disappear occurs in the second screen sub-region.

To improve this case and improve the use experience of the user, in this embodiment, when the target tile is displayed across the boundary line between the corresponding first screen sub-region and the upper adjacent second screen sub-region, a 3D model may not be displayed on an upper part that exceeds the boundary line. As described above, the 3D model may include a 3D building, a 3D road, and the like. In this embodiment, the 3D building is used as an example for description below.

The target tile shown in FIG. 15 is still used as an example. In a manner of displaying different content above and below the boundary line for the target tile, as shown in (a) and (b) in FIG. 16, an upper part that is in the target tile corresponding to the first screen sub-region and that exceeds the boundary line does not display a 3D building. Therefore, in a process in which the target tile moves from bottom to top, the 3D building gradually disappears. As shown in (c) in FIG. 16, when the target tile completely moves to the upper second screen sub-region, a corresponding low-level tile is loaded and displayed in the second screen sub-region. In this case, that the 3D building in the target tile gradually disappears when passing through the boundary line is visually presented. In this way, visual experience of the user is good.

To implement the foregoing display effect, in this embodiment, when the map is rendered, a map element in a tile may be drawn in a manner of modifying a far section.

Specifically, when an image is rendered by using the rendering tool, for example, OpenGL, a 3D model is projected to the screen by using a projection transformation technology to form a 2D image, to present a 3D world on a 2D plane. Because a perspective projection technology is similar to a human visual system, currently, the technology is mostly used for image drawing.

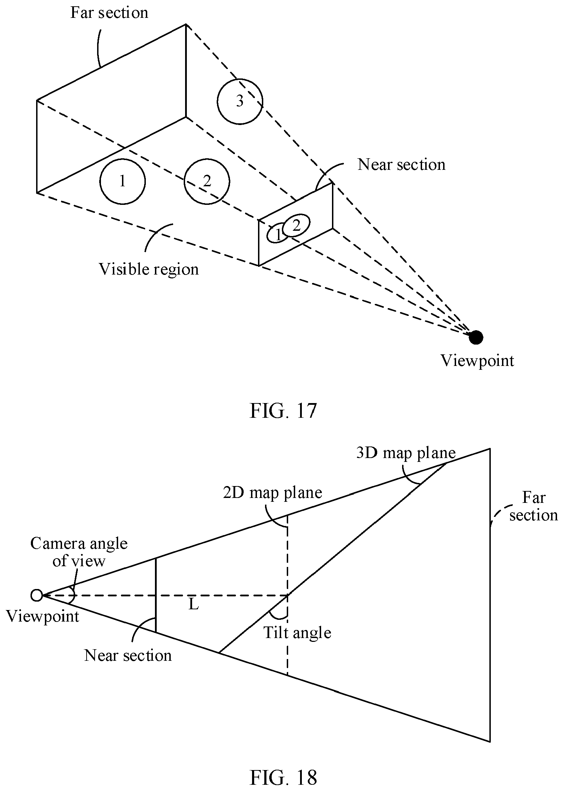

The perspective projection technology simulates an imaging process of a camera to form a 2D image, and adjusts coordinates of a drawn object by using a virtual camera location. Specifically, as shown in FIG. 17, in the perspective projection technology, a pyramid is used as a visual cone, and a virtual camera is located at a cone vertex (also referred to as a viewpoint) of the pyramid. The pyramid is truncated by two sections (that is, a far section and a near section) to form a frustum. A region located in the frustum is a visible region, coordinates in the visible region are projected on a visual plane (namely, a projection plane, and usually the near section), and coordinates outside the frustum are to be cropped. For example, as shown in FIG. 17, an object 1 and an object 2 that are represented by balls are located in the visible region, and are projected on the near section, in other words, are displayed on the screen. An object 3 is located outside the visible region, and does not appear on the screen.

FIG. 18 is a schematic diagram of a map rendering principle. As shown in FIG. 18, the terminal device may determine to-be-drawn map data based on a viewpoint location, a camera angle of view, a near section, a far section, a map plane, and a tilt angle of the map plane, and then project and display the map data based on the perspective projection technology.

The viewpoint location is a location of a viewpoint relative to the map plane. A distance L (namely, a height of a virtual camera) from the viewpoint to a 2D map plane may be determined based on a to-be-displayed target level, and a projection of the viewpoint on the 2D map plane overlaps a central point of the 2D map plane, so that the viewpoint location may be determined accordingly. When a 2D map is drawn, the 2D map plane is a map plane of the to-be-displayed 2D map. When a 3D map is drawn, the 2D map plane is a 2D map plane corresponding to the to-be-displayed 3D map, namely, a map plane corresponding to a 2D map obtained after the to-be-displayed 3D map is switched to the 2D map.

The camera angle of view, a location of the near section, and a location of the far section may be preset. The location of the near section may be specifically represented by a distance from the near section to the viewpoint. Similarly, the location of the far section may be represented by a distance from the far section to the viewpoint.

The map plane includes a tile to be displayed in a map display region.

When the 2D map is drawn, the tilt angle of the map plane is 0 degrees. When the 3D map is drawn, the tilt angle of the map plane is greater than 0 degrees.

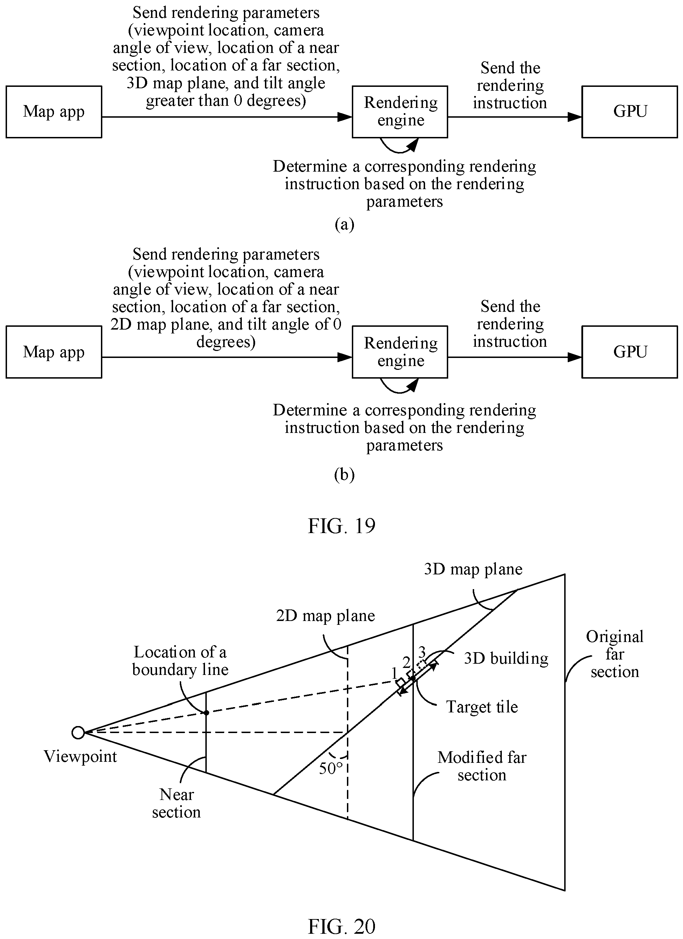

In the foregoing steps, after the tiles corresponding to the screen sub-regions are obtained, the first tile and the second tile may be displayed in the map display region on the screen through the graphics processing unit (graphics processing unit, GPU) by invoking the rendering tool, for example, the open graphics library (open graphics library, OpenGL). A specific principle includes:
After tile data corresponding to each screen sub-region is obtained, and it is determined that the tile is used to draw a 3D map, the map app obtains rendering parameters used to draw the 3D map. As shown in (a) in FIG. 19, the map app sends the rendering parameters to a rendering engine (for example, an OpenGL rendering engine), where the rendering parameters may include: a viewpoint location, a camera angle of view, a location of a near section, a location of a far section, a 3D map plane, and a tilt angle (greater than 0 degrees) of the 3D map plane. The rendering engine may determine a corresponding rendering instruction based on these rendering parameters by using the perspective projection technology, and then send the rendering instruction to the GPU, so that the GPU may render, according to the rendering instruction, map data projected to the near section. The map data projected to the near section includes a map element on the 3D map plane that is located within a range of the camera angle of view (that is, within a visual region) between the near section and the far section, and does not include a map element on the 3D map plane that is behind the far section (located outside the visual region).

After the tile corresponding to each screen sub-region is obtained, and it is determined that the tile is used to draw a 2D map, after obtaining rendering parameters used to draw the 2D map, as shown in (b) in FIG. 19, the map app may send the rendering parameters to a rendering engine (for example, an OpenGL rendering engine), where the rendering parameters may include: a viewpoint location, a camera angle of view, a location of a near section, a location of a far section, a 2D map plane, and a tilt angle (0 degrees) of the 2D map plane. The rendering engine may determine a corresponding rendering instruction based on these rendering parameters by using the perspective projection technology, and then send the rendering instruction to the GPU, so that the GPU may render, according to the rendering instruction, map data projected to the near section. The map data projected to the near section includes a map element on the 2D map plane that is located within a range of the camera angle of view (that is, within a visual region) between the near section and the far section, and does not include a map element on the 2D map plane that is outside the range of the camera angle of view (that is, outside the visual region) between the near section and the far section.

Based on the foregoing principle, in this embodiment, as shown in FIG. 20, when point, line, and plane elements in the map are drawn, drawing may be performed based on a determined distance of the original far section; and when a 3D model (for example, a 3D building) in the map is drawn, drawing may be performed after the far section is moved forward to a target location.

The target location is at an intersection point between the map plane and a ray that points from the viewpoint to a location of the boundary line on the near section (because the figure is a side view, the boundary line is represented as a point), and the target location is on a modified far section. Actually, the target location is at an intersection point between the modified far section and the map plane. In FIG. 20, the location of the boundary line is, for example, at upper 1/4 of the near section, in other words, the division ratio of the second screen sub-region to the first screen sub-region is 1:3.

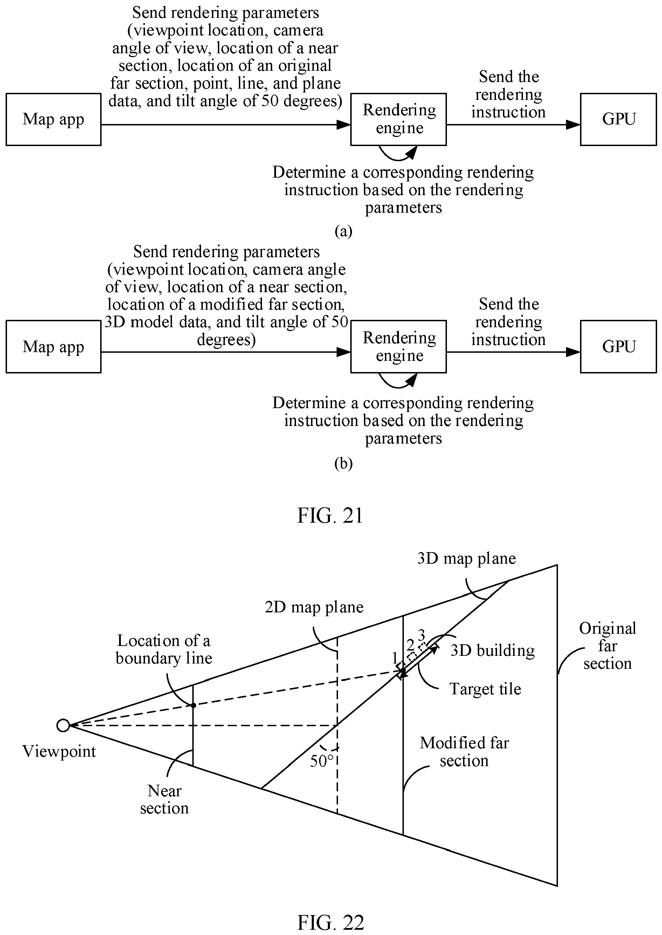

In the embodiment of FIG. 20, when point, line, and plane data of the tiles included in the first screen sub-region and the second screen sub-region is drawn, as shown in (a) in FIG. 21, rendering parameters sent by the map app to the rendering engine may include the viewpoint location, the camera angle of view, the location of the near section, the location of the original far section, point, line, and plane data (including point, line, and/or plane data in the first tile and the second tile) in the 3D map plane, and the tilt angle (specifically, 50°) of the 3D map plane. The rendering engine may determine a corresponding rendering instruction based on these rendering parameters by using the perspective projection technology, and then send the rendering instruction to the GPU, so that the GPU may render, according to the rendering instruction, map data projected to the near section. The map data projected to the near section includes point, line, and plane elements on the 3D map plane that are located within the range of the camera angle of view (that is, within the visual region) between the near section and the far section.

When 3D model data of the tiles included in the first screen sub-region and the second screen sub-region is drawn, as shown in (b) in FIG. 21, rendering parameters sent by the map app to the rendering engine may include the viewpoint location, the camera angle of view, the location of the near section, a location of the modified far section, 3D model data in the 3D map plane, and the tilt angle (specifically, 50°) of the 3D map plane. The rendering engine may determine a corresponding rendering instruction based on these rendering parameters by using the perspective projection technology, and then send the rendering instruction to the GPU, so that the GPU may render, according to the rendering instruction, map data projected to the near section. The map data projected to the near section does not include a 3D model that is in the target tile and that is located behind the modified far section.

As shown in FIG. 20 and (a) in FIG. 16, after the far section is moved forward to the target location, a 3D building 1 and a part that is of a 3D building 2 and that is close to the 3D building 1 in the target tile (represented by solid lines in FIG. 20) are located in the visible region between the near section and the far section, and may be displayed on the screen. A part that is of the 3D building 2 and that is close to a 3D building 3 and the 3D building 3 in the target tile (represented by dashed lines in FIG. 20) are located outside the visible region, and are not displayed on the screen. A display effect on the screen is shown in (a) in FIG. 16, to be specific, a 3D building is displayed below the boundary line, and no 3D building is displayed above the boundary line.

FIG. 22 shows a result obtained after the target tile in FIG. 20 is moved upward by a distance. A display effect is shown in (b) in FIG. 16. The 3D building 2 in the target tile is moved upward to the second screen sub-region (that is, outside the visual region), and the 3D building 1 is moved on the boundary line and displayed across the boundary line.

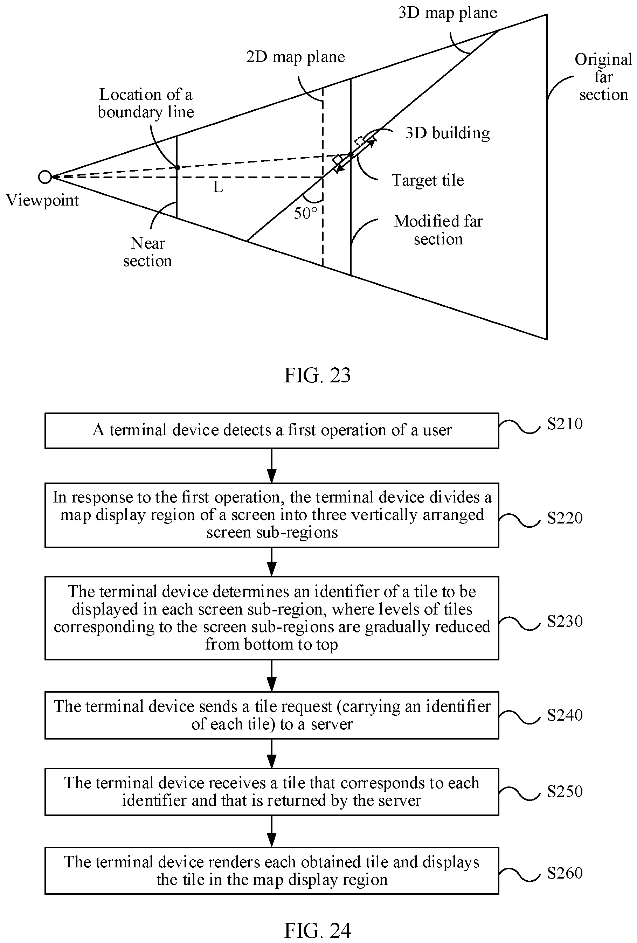

It may be understood that the target location is determined based on a plurality of factors such as the location of the boundary line, a distance from the viewpoint to a 2D map plane corresponding to the 3D map plane, and the tilt angle of the 3D map plane. As shown in FIG. 23, for example, the location of the boundary line is at upper 2/5 of the near section, and other factors are the same as those in FIG. 20. In comparison with FIG. 20, in FIG. 23, the location of the boundary line is moved downward. Correspondingly, the location of the target tile is closer to the lower edge of the map display region, and the location of the modified far section on the 3D map plane of the target tile (that is, the target location) is closer to the viewpoint.

As shown in FIG. 23, the location of the boundary line is at upper 2/5 of the near section, in other words, the division ratio of the second screen sub-region to the first screen sub-region is 2:3, and the tilt angle of the 3D map plane is, for example, 50°.

The foregoing describes a case in which there are two screen sub-regions, and the following describes a case in which there are three screen sub-regions.

FIG. 24 is a schematic flowchart of another map display method according to an embodiment of this application. As shown in FIG. 24, the method may include the following steps.

Step S210: A terminal device detects a first operation of a user.

This step is similar to step S110. For related descriptions, refer to step S110. Details are not described herein again.

Step S220: In response to the first operation, the terminal device divides a map display region of a screen into three vertically arranged screen sub-regions.

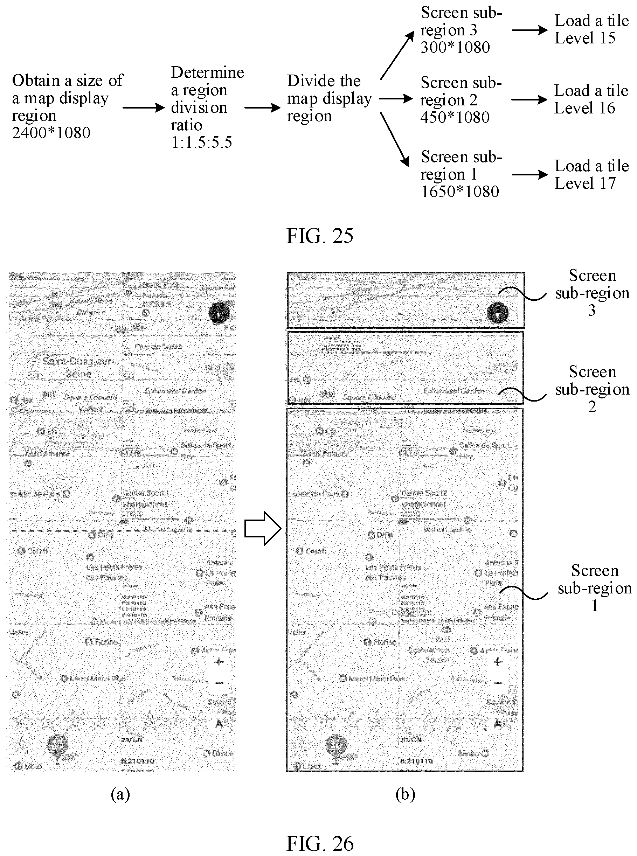

With reference to FIG. 25, similar to step S120, when the screen sub-regions are obtained through division, a size of the map display region on the screen (for example, 2400*1080 pixels herein) may be obtained, a region division ratio (for example, 1: 1.5:5.5 herein) is determined, and then the map display region is divided based on the region division ratio, to obtain the three vertically arranged screen sub-regions: a lower screen sub-region 1 (1650*1080 pixels), a middle screen sub-region 2 (450*1080 pixels), and an upper screen sub-region 3 (300*1080 pixels).

To improve use experience of the user, when the screen sub-regions are obtained through division, areas of the screen sub-regions may be gradually reduced from bottom to top. In this way, a high-level tile with a large range can be displayed to the user, so that the user can better obtain map information.

Other content in this step is similar to that in step S120. For specific descriptions, refer to related descriptions in step S120. Details are not described herein again.

Step S230: The terminal device determines an identifier of a tile to be displayed in each screen sub-region, where levels of tiles corresponding to the screen sub-regions are gradually reduced from bottom to top.

Similar to step S130, the terminal device may first determine the identifier of the tile to be displayed in each screen sub-region, and then obtain the related tile.

Specifically, when determining the tile, the terminal device may first determine a first geographical range to be displayed in the map display region, and then determine, based on the first geographical range, a second geographical range to be displayed in each screen sub-region. In addition, the terminal device may determine, based on a target level, a level of the tile to be displayed in each screen sub-region. Finally, for each screen sub-region, the terminal device may determine the identifier of the tile to be displayed in the screen sub-region based on the second geographical range corresponding to the screen sub-region and the level of the to-be-displayed tile.

When the level of the tile corresponding to each screen sub-region is determined, a level of a tile corresponding to a screen sub-region (namely, the screen sub-region 1) closest to the bottom of the screen may be equal to the target level, for example, level 17 shown in FIG. 25. In two adjacent screen sub-regions, a level of a tile corresponding to a screen sub-region close to the top of the screen may be a first preset level lower than a level of a tile corresponding to a screen sub-region close to the bottom of the screen. For example, as shown in FIG. 25, a level of a tile corresponding to the screen sub-region 2 is level 16, and a level of a tile corresponding to the screen sub-region 3 is level 15, that is, the first preset level is one level.

It may be understood that first preset levels corresponding to pairs of adjacent screen sub-regions may be the same or may be different, to be specific, a tile level difference between the screen sub-region 2 and the screen sub-region 1 may be different from a tile level difference between the screen sub-region 3 and the screen sub-region 2. In FIG. 25, an example in which a tile level difference between adjacent screen sub-regions is 1 is merely used for description, and this application is not limited thereto.

In addition, a level of a tile corresponding to a screen sub-region (namely, the screen sub-region 3) closest to the top of the screen may be lower than a second preset level, to further reduce a required map data volume.

Other content in this step is similar to that in step S 120. For specific descriptions, refer to related descriptions in step S120. Details are not described herein again.

Step S240: The terminal device sends a tile request to a server.

After identifiers of tiles corresponding to all screen sub-regions are determined, the identifiers of the tiles may be carried in the tile request, and then the request is sent to the server to download the corresponding tiles.

For related descriptions of the tile request, refer to step S140. Details are not described herein again.

Similar to step S140, after the identifier of the tile corresponding to each screen sub-region is determined, whether the corresponding tile exists in a local buffer may be first checked. For a tile existing in the buffer, the tile may not need to be requested from the server, so that data traffic is reduced and download efficiency is improved.

Step S250: The terminal device receives a tile that corresponds to each identifier and that is returned by the server.

Step S260: The terminal device renders each obtained tile and displays the tile in the map display region.

After the tile corresponding to each screen sub-region is obtained, the corresponding tile may be rendered in each screen sub-region by a GPU by invoking a rendering tool, for example, OpenGL, and then is displayed in the map display region on the screen.

FIG. 26 is a schematic diagram of comparison of map display effects before and after a multi-level display manner is used when a map display level is low. As shown in (a) in FIG. 26, a 3D map is not displayed in the multi-level display manner, and tiles of a same level are displayed in the map display region. As shown in (b) in FIG. 26, after the 3D map is displayed in the multi-level display manner, a level of a tile displayed in a nearby region (corresponding to the screen sub-region 1) of the map remains unchanged, and levels of tiles displayed in a remote region (corresponding to the screen sub-region 2 and the screen sub-region 3) of the map are reduced and displayed map information is reduced. In addition, the level of the tile corresponding to the screen sub-region 3 is lower than the level of the tile corresponding to the screen sub-region 3, and map information displayed in the screen sub-region 3 is less than map information displayed in the screen sub-region 2. Correspondingly, map data loaded in the screen sub-region 2 and the screen sub-region 3 is reduced, and therefore traffic, power consumption, and rendering overheads required for displaying the 3D map are reduced. Therefore, the terminal device can support 3D map display requirements of various sizes of fields of view, and can also display map data in the remote region to the user, so that the use experience of the user can also be improved.

Similar to step S160, when map display regions of tiles corresponding to two adjacent screen sub-regions overlap, a tile corresponding to a screen sub-region that is in the two screen sub-regions and that is close to the bottom of the screen may be displayed in an overlapping region. Correspondingly, during rendering and display, a template testing technology may be used to render the tiles corresponding to the screen sub-regions from bottom to top. Alternatively, the template testing technology may not be used, and the tiles corresponding to the screen sub-regions are rendered from top to bottom.

When the tiles are rendered in the foregoing manner, when a target tile is displayed crosses a boundary line between a corresponding screen sub-region and an upper adjacent screen sub-region, if a tile corresponding to the adjacent screen sub-region does not include a 3D model, no 3D model is displayed in a part that is of the target tile and that is above the boundary line, to improve the use experience of the user.

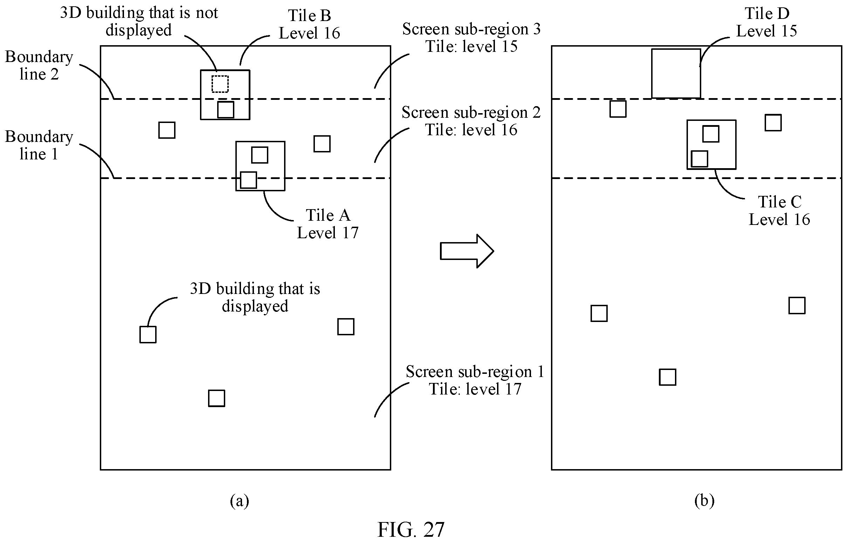

For example, as shown in (a) in FIG. 27, it is assumed that the tile corresponding to the screen sub-region 1 is at level 17, the tile corresponding to the screen sub-region 2 is at level 16, the tile corresponding to the screen sub-region 3 is at level 15, both the tile corresponding to the screen sub-region 1 and the tile corresponding to the screen sub-region 1 include 3D models, and the tile corresponding to the screen sub-region 3 does not include a 3D model. When a tile A corresponding to the screen sub-region 1 is displayed across a boundary line 1 between the screen sub-region 1 and the screen sub-region 2, a 3D model may be displayed in a part that is of the tile A and that is above the boundary line 1. When a tile B corresponding to the screen sub-region 2 is displayed across a boundary line 2 between the screen sub-region 2 and the screen sub-region 3, no 3D model is displayed in a part that is of the tile B and that is above the boundary line 2. As shown in (b) in FIG. 27, after the tile A completely moves to the upper screen sub-region 2, a corresponding low-level tile C is loaded and displayed in the screen sub-region 2; after the tile B completely moves to the upper screen sub-region 3, a corresponding low-level tile D is loaded and displayed in the screen sub-region 3. The tile C is at level 16 and includes a 3D model, and the tile D is at level 15 and does not include a 3D model.

It may be understood that a target tile corresponding to the screen sub-region 1 is not limited to the tile A, and a target tile corresponding to the screen sub-region 2 is not limited to the tile B. There may be a plurality of target tiles corresponding to each of the screen sub-region 1 and the screen sub-region 2. FIG. 27 uses only one target tile as an example for description, and is not intended to limit this application.

Other content in this step is similar to that in step S160. For specific descriptions, refer to related descriptions in step S160. Details are not described herein again.

In addition, for a case in which there are more screen sub-regions, a display principle is similar to that in the case in which there are three screen sub-regions. Details are not described herein again.

Persons skilled in the art may understand that the foregoing embodiment is an example, but is not intended to limit this application. In a possible case, execution sequences of one or more steps in the foregoing steps may be adjusted, or the steps may be selectively combined to obtain one or more other embodiments. Persons skilled in the art may select any combination of the foregoing steps based on a requirement, and any combination that does not depart from essence of the solutions of this application shall fall within the protection scope of this application.

According to the map display method provided in this embodiment, in a map display process, the map display region of the screen is divided, and tiles of different levels are loaded and displayed in screen sub-regions. Levels of tiles corresponding to the screen sub-regions are gradually reduced from bottom to top. In this way, a map data volume required by the remote region of the map can be effectively reduced, and therefore the traffic, power consumption, and rendering overheads can be reduced. Therefore, the terminal device can support the 3D map display requirements of various sizes of fields of view, and the map data in the remote region can also be displayed to the user in this solution, so that the use experience of the user can also be improved.

Based on a same concept, as an implementation of the foregoing method, an embodiment of this application provides a map display apparatus. The apparatus embodiment corresponds to the foregoing method embodiment. For ease of reading, detailed content in the foregoing method embodiment is not described in detail in this apparatus embodiment. However, it should be understood that the apparatus in this embodiment can correspondingly implement all content in the foregoing method embodiment.

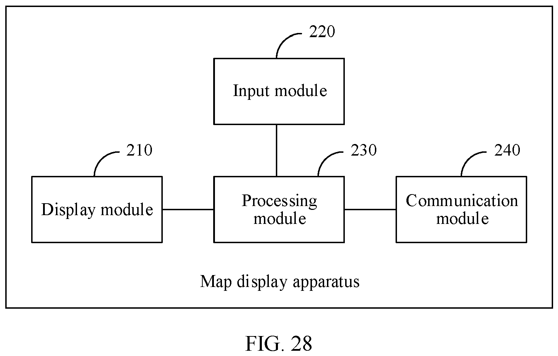

FIG. 28 is a schematic diagram of a structure of the map display apparatus according to an embodiment of this application. As shown in FIG. 28, the apparatus provided in this embodiment may include:
a display module 210, an input module 220, a processing module 230, and a communication module 240.

The display module 210 is configured to support a terminal device in performing the interface display operation in the foregoing embodiment, and/or is configured to perform another process of the technology described in this specification. The display module may be a touchscreen, other hardware, or a combination of hardware and software.

The input module 220 is configured to receive an input of a user on a display interface of the terminal device, for example, a touch input, a voice input, or a gesture input. The input module is configured to support the terminal device in performing the step of receiving the call answering operation of the user in the foregoing embodiment and/or another process of the technology described in this specification. The input module may be a touchscreen, other hardware, or a combination of hardware and software.

The processing module 230 is configured to support the terminal device in performing the processing operation in the foregoing embodiment, and/or is configured to perform another process of the technology described in this specification.

The communication module 240 is configured to support the terminal device in performing the operation related to the communication process between the cloud device and the another terminal device in the foregoing embodiment, and/or is configured to perform another process of the technology described in this specification.

The apparatus provided in this embodiment can perform the foregoing method embodiment, and implementation principles and technical effects of the apparatus are similar to those of the foregoing method embodiment. Details are not described herein again.

Persons skilled in the art may clearly understand that, for the purpose of convenient and brief description, division into the foregoing functional units or modules is merely used as an example for description. During actual application, the foregoing functions may be allocated to different functional units or modules for implementation based on a requirement. To be specific, an inner structure of the apparatus is divided into different functional units or modules to implement all or some of the functions described above. The functional units or modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely used for ease of distinguishing between the functional units or modules, but are not intended to limit the protection scope of this application. For a specific working process of the units or modules in the foregoing system, refer to a corresponding process in the foregoing method embodiment. Details are not described herein again.

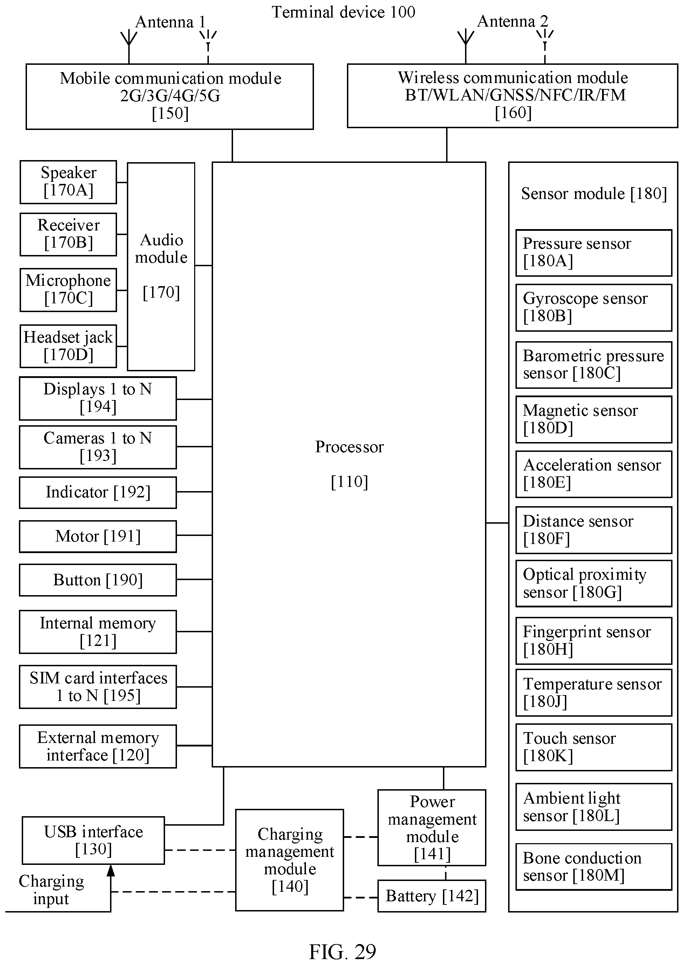

Based on a same concept, an embodiment of this application further provides a terminal device. FIG. 29 is a schematic diagram of a structure of the terminal device according to an embodiment of this application.

The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal device 100. In some other embodiments of this application, the terminal device 100 may include more or fewer components than those shown in the figure, some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the terminal device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has just been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). The I2S interface may be used for audio communication. The PCM interface may also be used for audio communication, and implement analog signal sampling, quantization, and coding. The UART interface is a universal serial data bus, and is used for asynchronous communication. The bus may be a two-way communication bus, and converts to-be-transmitted data between serial communication and parallel communication. The MIPI interface may be configured to connect the processor 110 to peripheral components such as the display 194 and the camera 193. The MIPI interface includes a camera serial interface (camera serial interface, CSI), a display serial interface (display serial interface, DSI), and the like. The GPIO interface may be configured by using software. The GPIO interface may be configured as a control signal interface, or may be configured as a data signal interface. The USB interface 130 is an interface that complies with a USB standard specification, and may be specifically a mini USB interface, a micro USB interface, a USB type C interface, or the like. The USB interface 130 may be configured to connect to a charger to charge the terminal device 100, may be configured to transmit data between the terminal device 100 and a peripheral device, and may be configured to connect to a headset to play audio through the headset. The interface may be further configured to connect to another terminal device, for example, an AR device.

It may be understood that an interface connection relationship between the modules shown in this embodiment of this application is merely an example for description, and does not constitute a limitation on the structure of the terminal device 100. In some other embodiments of this application, the terminal device 100 may alternatively use an interface connection manner different from that in this embodiment, or use a combination of a plurality of interface connection manners.

The charging management module 140 is configured to receive a charging input from the charger. The charger may be a wireless charger or a wired charger. When charging the battery 142, the charging management module 140 may further supply power to the terminal device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery status of health (electric leakage and impedance). In some other embodiments, the power management module 141 may alternatively be disposed in the processor 110.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution that is applied to the terminal device 100 and that is for wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and the amplified signal is converted by the antenna 1 into an electromagnetic wave for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal through an audio device (which is not limited to the speaker 170A or the receiver 170B), or displays an image or a video on the display 194.

The wireless communication module 160 may provide a solution that is applied to the terminal device 100 and that is for wireless communication including a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 of the terminal device 100 is coupled to the mobile communication module 150, and the antenna 2 is coupled to the wireless communication module 160, so that the terminal device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The terminal device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information. The display 194 is configured to display an image, a video, and the like.

The terminal device 100 may implement a photographing function through the ISP, the camera 193, the video codec, the GPU, the display 194, the application processor, and the like.

The ISP is configured to process data fed back by the camera 193. The camera 193 is configured to capture a static image or a video. The digital signal processor is configured to process a digital signal, and may further process another digital signal in addition to the digital image signal. The video codec is configured to compress or decompress a digital video.

The NPU is a neural-network (neural-network, NN) computing processor, quickly processes input information with reference to a structure of a biological neural network, for example, with reference to a transfer mode between human brain neurons, and may further continuously perform self-learning. Applications such as intelligent cognition of the terminal device 100, for example, image identification, facial identification, speech identification, and text understanding, may be implemented through the NPU.

The external memory interface 120 may be configured to connect to an external storage card, for example, a micro SD card, to extend a storage capability of the terminal device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function application and data processing of the terminal device 100.

The terminal device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is further configured to convert an analog audio input into a digital audio signal. The audio module 170 may be further configured to code and decode an audio signal. The speaker 170A, also referred to as a "loudspeaker", is configured to convert an electrical audio signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The terminal device 100 may receive a button input, and generate a button signal input related to a user setting and function control of the terminal device 100. The motor 191 may generate a vibration prompt. The motor 191 may be configured to provide an incoming call vibration prompt or a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like.

The terminal device provided in this embodiment can perform the foregoing method embodiments, and implementation principles and technical effects of the terminal device are similar to those of the foregoing method embodiment. Details are not described herein again.

An embodiment of this application further provides a computer-readable storage medium. The computer-readable storage medium stores a computer program. When the computer program is executed by a processor, the method in the foregoing method embodiment is implemented.

An embodiment of this application further provides a computer program product. When the computer program product is run on an electronic device, the electronic device is enabled to perform the method in the foregoing method embodiment.

An embodiment of this application further provides a chip system, including a processor. The processor is coupled to a memory, and the processor executes a computer program stored in the memory to implement the method in the foregoing method embodiment. The chip system may be a single chip, or a chip module including a plurality of chips.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Persons of ordinary skill in the art may understand that all or some of the procedures of the methods in embodiments may be implemented by a computer program instructing related hardware. The program may be stored in a computer-readable storage medium. When the program is executed, the procedures in the method embodiments may be performed. The foregoing storage medium may include any medium that can store program code, like a ROM, a random access memory RAM, a magnetic disk, or an optical disc.

Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

In the foregoing embodiments, descriptions of the embodiments have respective focuses. For a part that is not described in detail or recorded in an embodiment, refer to related descriptions in another embodiment.

In embodiments provided in this application, it should be understood that the disclosed apparatus/device and method may be implemented in other manners. For example, the described apparatus/device embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

It should be understood that in the descriptions of the specification and the appended claims of this application, the terms "include" and "have" and any other variants thereof are intended to cover the non-exclusive inclusion. For example, a process, method, system, product, or device that includes a series of steps or modules is not necessarily limited to those expressly listed steps or modules, but may include other steps or modules not expressly listed or inherent to the process, method, product, or device.

Unless otherwise specified, "/" in the descriptions of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists. A and B may be singular or plural.

In addition, in the descriptions of this application, unless otherwise specified, "a plurality of" means two or more than two. "At least one of the following" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural.

As used in the specification and the appended claims of this application, according to the context, the term "if" may be interpreted as "when", "once", "in response to determining", or "in response to detecting". Similarly, according to the context, the phrase "if it is determined that" or "if (a described condition or event) is detected" may be interpreted as a meaning of "once it is determined that", "in response to determining", "once (the described condition or event) is detected", or "in response to detecting (the described condition or event)".

In addition, in the descriptions of the specification and the appended claims of this application, the terms "first", "second", "third", and the like are intended to distinguish between similar objects, but do not necessarily indicate a specific order or sequence. It should be understood that data termed in such a way may be interchangeable in proper circumstances, so that embodiments described herein can be implemented in an order other than the order illustrated or described herein.

Reference to "an embodiment", "some embodiments", or the like described in this specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment, but instead mean "one or more but not all embodiments", unless otherwise specifically emphasized in another manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A map display method, applied to a terminal device, wherein the method comprises:
displaying a first interface, wherein the first interface displays a first map region;
receiving a first operation of a user; and
displaying a second interface in response to the first operation, wherein the second interface comprises a plurality of screen sub-regions, and the plurality of screen sub-regions comprise a first screen sub-region and a second screen sub-region located above the first screen sub-region, wherein
a tile in the first screen sub-region is a first tile, a tile in the second screen sub-region is a second tile, and a level of the second tile is less than a level of the first tile.

2. The method according to claim 1, wherein the second interface is a navigation interface or an interface displaying a non-navigation map.

3. The method according to claim 1 or 2, wherein the first operation comprises at least one of the following operations: an operation of enabling a navigation mode, a gesture operation of changing a tilt angle of a map plane, a tapping operation on a target control, a map zooming operation, and a map panning operation.

4. The method according to any one of claims 1 to 3, wherein the second interface comprises a first object; and when the first object is completely located in the first screen sub-region, a 3D model corresponding to the first object is displayed;
when a first part of the first object is located in the first screen sub-region and a second part of the first object is located in the second screen sub-region, a 3D model corresponding to the first part is displayed, and a 3D model corresponding to the second part is not displayed; and
when the first object completely moves to the second screen sub-region, the 3D model corresponding to the first object is not displayed.

5. The method according to any one of claims 1 to 4, wherein a tile in the first map region is a third tile, and the level of the first tile is equal to a level of the third tile.

6. The method according to any one of claims 1 to 5, wherein the second tile does not comprise a 3D model.

7. The method according to any one of claims 1 to 6, wherein the first tile comprises a 3D model.

8. The method according to any one of claims 1 to 7, wherein the method further comprises:
enabling or disabling a multi-level display mode in response to a second operation of the user, wherein a map display region can display tiles of a plurality of levels in the multi-level display mode.

9. The method according to any one of claims 1 to 8, wherein the method further comprises:
in response to a third operation of the user, enabling or disabling a function of disabling the multi-level display mode in a non-navigation mode, wherein the map display region can display tiles of a plurality of levels in the multi-level display mode.

10. The method according to any one of claims 1 to 9, wherein the displaying a second interface in response to the first operation comprises:
displaying the second interface in response to the first operation when a tilt angle of a map plane to be displayed on the second interface is greater than or equal to a target angle.

11. The method according to any one of claims 1 to 10, wherein the displaying a second interface in response to the first operation comprises:
in response to the first operation, dividing the map display region of a screen into the plurality of screen sub-regions;
obtaining the first tile and the second tile; and
rendering and displaying the second interface based on each first tile and each second tile.

12. The method according to claim 11, wherein the obtaining the first tile and the second tile comprises:
determining an identifier of the first tile and an identifier of the second tile; and
obtaining the first tile and the second tile based on the identifier of the first tile and the identifier of the second tile.

13. The method according to claim 12, wherein the determining an identifier of the first tile and an identifier of the second tile comprises:
determining, based on a to-be-displayed target level, a geographical range to be displayed in the map display region;
determining, based on the geographical range to be displayed in the map display region, a geographical range to be displayed in the first screen sub-region and a geographical range to be displayed in the second screen sub-region;
determining the level of the first tile and the level of the second tile based on the target level, wherein the level of the first tile is equal to the target level;
determining the identifier of the first tile based on the geographical range to be displayed in the first screen sub-region and the level of the first tile; and
determining the identifier of the second tile based on the geographical range to be displayed in the second screen sub-region and the level of the second tile.

14. The method according to claim 12 or 13, wherein the obtaining the first tile and the second tile comprises:
sending a tile request to a server, wherein the tile request carries the identifier of the first tile and/or the identifier of the second tile; and
receiving a tile that corresponds to the identifier and that is returned by the server.

15. The method according to any one of claims 1 to 14, wherein an area of the first screen sub-region is greater than an area of the second screen sub-region.

16. The method according to any one of claims 1 to 15, wherein the plurality of screen sub-regions further comprise a third screen sub-region, and the third screen sub-region is located between the first screen sub-region and the second screen sub-region; and
a tile in the third screen sub-region is a fourth tile, and a level of the fourth tile is less than the level of the first tile and is greater than the level of the second tile.

17. A terminal device, comprising a memory and a processor, wherein the memory is configured to store a computer program, and the processor is configured to perform the method according to any one of claims 1 to 16 when invoking the computer program.

18. A computer-readable storage medium, wherein the computer-readable storage medium stores a computer program; and when the computer program is executed by a processor, the method according to any one of claims 1 to 16 is implemented.

19. A computer program product, wherein when the computer program product runs on a terminal device, the terminal device is enabled to perform the method according to any one of claims 1 to 16.

20. A chip system, wherein the chip system comprises a processor, the processor is coupled to a memory, and the processor executes a computer program stored in the memory to implement the method according to any one of claims 1 to 16.
